# EUROPEAN PATENT SPECIFICATION

(11) **EP 4 473 782 B1**
(45) Date of publication and mention of the grant of the patent: **15.07.2026**
(21) Application number: 22931335.8
(22) Date of filing: 15.03.2022
(51) Int. Cl.: G06N 3/098, G06N 3/045, G06N 3/084, H04L 41/08, H04W 24/02

(54) **APPARATUS AND METHODS FOR MACHINE LEARNING WITH LOW TRAINING DELAY AND COMMUNICATION OVERHEAD**
VORRICHTUNG UND VERFAHREN FÜR MASCHINELLES LERNEN MIT GERINGER TRAININGSVERZÖGERUNG UND KOMMUNIKATIONSOVERHEAD
APPAREIL ET PROCÉDÉS D'APPRENTISSAGE AUTOMATIQUE AVEC FAIBLE RETARD DE FORMATION ET SURCHARGE DE COMMUNICATION

(43) Date of publication of application: 11.12.2024
(73) Proprietor: Huawei Technologies Co., Ltd., Shenzhen, Guangdong 518129 (CN)
(72) Inventor: TANG, Hao, Shenzhen, Guangdong 518129 (CN); ZHANG, Liqing, Ottawa, Ontario 231 (CA); MA, Jianglei, Ottawa, Ontario 231 (CA)
(74) Representative: MERH-IP Matias Erny Reichl Hoffmann Patentanwälte PartG mbB
(86) International application number: PCT/CN2022/081004
(87) International publication number: WO 2023/173296

(56) References cited:
- WO-A1-2021/142609
- WO-A1-2022/047757
- CN-A- 112 005 565
- CN-A- 112 990 423
- US-A1- 2021 160 149
- ABDULRAHMAN SAWSAN ET AL: "FedMCCS: Multicriteria Client Selection Model for Optimal IoT Federated Learning", IEEE INTERNET OF THINGS JOURNAL, IEEE, USA, vol. 8, no. 6, 5 October 2020 (2020-10-05), pages 4723 - 4735, XP011843458, DOI: 10.1109/JIOT.2020.3028742
- INTEL, NEC: "pCR 28.105 Add service framework for AI/ML model training", 3GPP TSG-SA5 MEETING #141E S5-221334, 7 January 2022 (2022-01-07), XP052101180

## Description

### TECHNICAL FIELD

The present disclosure relates to wireless communication generally, and, in particular embodiments, to methods and apparatuses for machine learning with low training delay and low communication overhead.

### BACKGROUND

Artificial Intelligence (AI) technologies may be applied in communication, including AI-based communication in the physical layer and/or AI-based communication in the medium access control (MAC) layer. For example, in the physical layer, the AI-based communication may aim to optimize component design and/or improve the algorithm performance. For the MAC layer, the AI-based communication may aim to utilize the AI capability for learning, prediction, and/or making a decision to solve a complicated optimization problem with possible better strategy and/or optimal solution, e.g. to optimize the functionality in the MAC layer.

In some implementations, an AI architecture in a wireless communication network may involve multiple nodes, where the multiple nodes may possibly be organized in one of two modes, i.e., centralized and distributed, both of which may be deployed in an access network, a core network, or an edge computing system or third party network. A centralized training and computing architecture are restricted by possibly large communication overhead and strict user data privacy. A distributed training and computing architecture may comprise several frameworks, e.g., distributed machine learning and federated learning.

However, communications in wireless communications systems, including communications associated with AI training at multiple nodes, typically occur over non-ideal channels. For example, non-ideal conditions such as electromagnetic interference, signal degradation, phase delays, fading, and other non-idealities may attenuate and/or distort a communication signal or may otherwise interfere with or degrade the communications capabilities of the system.

Conventional AI training processes generally rely on hybrid automatic repeat request (HARQ) feedback and retransmission processes to try to ensure that data communicated between devices involved in AI training is successfully received. However, the communication overhead and delay associated with such retransmissions can be problematic.
ABDULRAHMAN SAWSAN ET AL:"FedMCCS: Multicriteria Client Selection Model for Optimal IoT Federated Learning", IEEE INTERNET OF THINGS JOURNAL, IEEE, USA, vol. 8, no. 6, 5 October 2020 (2020-10-05), pages 4723-4735 discloses a server selecting the clients to participate in the coming learning rounds according to their resource information.

### SUMMARY

According to a first broad aspect there is provided a method according to claim 1.

Providing AI/ML model training capability feedback in accordance with the first broad aspect of the present disclosure can have several advantages. For example, the AI/ML model training capability feedback can be utilized to selectively include or exclude the first device from participating in one or more iterations of an AI/ML model training procedure based on the device's currently reported AI/ML model training capabilities, which can potentially reduce training latency and thereby achieve fast training convergence and/or reduce the communication overhead associated with the AI/ML model training procedure, as discussed in further detail herein.

In some embodiments, determining the AI/ML model training capability of the first device includes selecting an AI/ML model training capability type from among a predefined or configured hierarchy of AI/ML model training capability types. In such embodiments, transmitting the AI/ML model training capability to the second device could include transmitting an index corresponding to the AI/ML model training capability type selected from among the predefined or configured hierarchy of AI/ML model training capability types.

In some embodiments, transmitting the AI/ML model training capability to the second device includes determining the AI/ML model training capability of the first device has changed, and transmitting the changed AI/ML model training capability to the second device after determining the AI/ML model training capability of the first device has changed. In such embodiments, determining the AI/ML model training capability of the first device has changed could include, for example, identifying a change in at least one of: i) the current processing capability of the first device; ii) the current volume of training data available for the AI/ML model training process at the first device; and/or iii) the sensing capacity of the first device to collect training data for the AI/ML model training process.

In some embodiments, transmitting the AI/ML model training capability to the second device is done after receiving data or control information from the second device during the AI/ML model training process. For example, in some embodiments, the first device may receive control signaling from the second device identifying a physical uplink control channel (PUCCH) resource to be used by the first device, and transmit the AI/ML model training capability to the second device using the PUCCH resource. In such embodiments, receiving control signaling from the second device identifying a PUCCH resource to be used by the first device could include: receiving, from the second device, downlink control information (DCI) scheduling a downlink transmission of the data or control information from the second device during the AI/ML model training process, wherein the DCI indicates the PUCCH resource to be used by the first device.

In some embodiments, the data or control information received from the second device includes AI/ML model update information from the second device for the AI/ML model training process.

The method according to the first broad aspect of the present disclosure further includes receiving, from the second device, control signaling configuring the first device with a rule for determining, for an iteration of the AI/ML model training process, whether the first device is to participate in the iteration.

In some embodiments, the method according to the first broad aspect of the present disclosure further includes participating in one or more iterations of the AI/ML model training process in accordance with the configured rule.

An iteration of the AI/ML model training process is associated with a respective value of an iteration identifier (ID) such that the respective value of the iteration ID is incremented by one for each subsequent iteration. In such embodiments, the control signaling may configure the first device to selectively participate in a given iteration based on the respective value of the iteration ID associated with the given iteration.

In some embodiments, the method according to the first broad aspect of the present disclosure further includes, for a given iteration of the AI/ML model training process, receiving, from the second device, control information indicating the value of the iteration ID associated with the given iteration.

In some embodiments, the method according to the first broad aspect of the present disclosure further includes, for a given iteration of the AI/ML model training process, receiving, from the second device, control information indicating at least one AI/ML model training capability type from among the predefined or configured hierarchy of AI/ML model training capability types that is to participate in the given iteration.

Alternatively, transmission, from the second device, of data or control information for a given iteration of the AI/ML model training process is scheduled by first downlink control information (DCI) wherein a cyclic redundancy check (CRC) value of the first DCI is scrambled with a first radio network temporary identifier (RNTI). In such embodiments, the method according to the first broad aspect of the present disclosure may further include receiving, from the second device, control signaling to configure the first device to monitor for the first DCI in accordance with a first monitoring periodicity.

In some embodiments, transmission, from the second device, of other data or control information is scheduled by second DCI, wherein a CRC value of the second DCI is scrambled with a second RNTI different from the first RNTI. In such embodiments, the method according to the first broad aspect of the present disclosure may further include receiving, from the second device, device-specific control signaling configuring the first device to monitor for the second DCI in accordance with a second monitoring periodicity.

In some embodiments, the second monitoring periodicity is separately configured from the first monitoring periodicity.

In some embodiments, the first RNTI is different from a Cell RNTI (C-RNTI).

In some embodiments, the method according to the first broad aspect of the present disclosure further includes, for a given iteration of the AI/ML model training process, transmitting local AI/ML model update information to the second device, the local AI/ML model update information including AI/ML model parameter updates based on training of a local AI/ML model at the first device. In such embodiments, the training of the local AI/ML model at the first device may be based on data or control information received from the second device for the given iteration of the AI/ML model training process. For example, the local AI/ML model update information may further include information indicating a value of an iteration ID associated with the given iteration for which the first device received the data or control information from the second device.

In some embodiments, the method according to the first broad aspect of the present disclosure further includes transmitting a request to participate in the AI/ML model training process to the second device.

In some embodiments, an iteration of the AI/ML model training process is associated with a respective value of an iteration identifier (ID) such that the respective value of the iteration ID is incremented by one for each subsequent iteration. In such embodiments, the method according to the first broad aspect of the present disclosure may further include receiving a transmission from the second device indicating the value of the iteration ID associated with a current iteration of the AI/ML model training process, wherein transmitting the request to participate in the AI/ML model training process is based on the value of the iteration ID associated with the current iteration of the AI/ML model training process.

In some embodiments, transmitting the request to participate in the AI/ML model training process to the second device includes transmitting the request to participate in the AI/ML model training process to the second device after determining the AI/ML model training capability of the first device has changed.

In some embodiments, the method according to the first broad aspect of the present disclosure further includes receiving control signaling from the second device configuring the first device to train a partial AI/ML model including a partial subset of parameters of a local AI/ML model at the first device.

In some embodiments, the method according to the first broad aspect of the present disclosure further includes transmitting local AI/ML model update information to the second device, the local AI/ML model update information including AI/ML model parameter updates for the partial subset of parameters based on training of the partial AI/ML model.

In some embodiments, the method according to the first broad aspect of the present disclosure further includes receiving control signaling from the second device configuring the first device to not participate in the AI/ML model training process.

In some embodiments, the method according to the first broad aspect of the present disclosure further includes transmitting a request for the first device to not participate in the AI/ML model training process to the second device.

In some embodiments, the method according to the first broad aspect of the present disclosure further includes, for a given iteration of the AI/ML model training process, transmitting local AI/ML model update information to the second device. In some such embodiments, the local AI/ML model update information may be based on training of a local AI/ML model at the first device and including AI/ML model parameter updates for only a partial subset of less than all AI/ML model parameters characterizing the local AI/ML model at the first device.

In some embodiments, the local AI/ML model update information includes value information including AI/ML model parameter update values for the partial subset of less than all AI/ML model parameters characterizing the local AI/ML model at the first device, and assignment information mapping the AI/ML model parameter update values to corresponding AI/ML model parameters of the local AI/ML model.

In some embodiments, the AI/ML model parameter update values are arranged in a predefined or configured order in the value information.

In some embodiments, the assignment information includes a bitmap that maps parameter groups (PG) of the local AI/ML model to corresponding AI/ML model parameter update values in the value information, wherein each PG is a set of consecutive parameters of the local AI/ML model.

In some embodiments, a size of each PG is predefined or configured by the second device.

In some embodiments, the assignment information indicates a set of contiguous AI/ML model parameters of the local AI/ML model, wherein the assignment information includes a start location of the AI/ML model parameters in the set and the number of AI/ML model parameters in the set.

In some embodiments, the assignment information indicates multiple sets of contiguous AI/ML model parameters of the local AI/ML model, wherein, for each set, the assignment information includes a start location of the AI/ML model parameters in the set and the number of AI/ML model parameters in the set.

In some embodiments, the local AI/ML model has a multi-layer structure, and the assignment information indicates one or more sets of AI/ML model parameters between two layers of the local AI/ML model.

In some embodiments, the value information includes one or more AI/ML model parameter update value sets, wherein, for each AI/ML model parameter update value set, the value information indicates: a respective value indication expressed as a bit-string for each AI/ML model parameter update value in the AI/ML model parameter update value set; and a range ID value associated with the AI/ML model parameter update value set. For example, in some embodiments, the range ID value may be expressed as one or more bits and may be selected from a plurality of range ID values, each range ID value of the plurality of range ID values being mapped to a different respective value range. In such embodiments, the respective value range that is mapped to the range ID value that is associated with the AI/ML model parameter update value set may determine the range and bit meaning of the bit-strings of the AI/ML model parameter update values in the AI/ML model parameter update value set.

In some embodiments, the value information includes at least a first AI/ML model parameter update value set and a second AI/ML model parameter update value set. In such embodiments, the value information for the first AI/ML model parameter update value set may indicate a respective value indication expressed as a bit-string for each AI/ML model parameter update value in the first AI/ML model parameter update value set, and a first range ID value associated with the first AI/ML model parameter update value set, wherein the first range ID value is expressed as one or more bits and is selected from the plurality of range ID values, the first range ID value being mapped to a first value range. In addition or instead, in such embodiments the value information for the second AI/ML model parameter update value set may indicate a respective value indication expressed as a bit-string for each AI/ML model parameter update value in the second AI/ML model parameter update value set, and a second range ID value associated with the second AI/ML model parameter update value set, wherein the second range ID value is expressed as one or more bits and is selected from the plurality of range ID values. For example, in some embodiments the second range ID value may be different from the first range ID value and may be mapped to a second value range different from the first value range.

In some embodiments, the mapping between range IDs and respective value ranges is predefined or configured by the second device.

According to a second broad aspect of the present disclosure, there is provided herein another method according to claim 7.

Providing information enabling devices to determine whether the first device is to participate in one or more iterations of an AI/ML model training procedure, and basing that information on AI/ML model training capability feedback from the devices, in accordance with the second broad aspect of the present disclosure can have several advantages. For example, selectively including or excluding devices from participating in one or more iterations of an AI/ML model training procedure based on their currently reported AI/ML model training capabilities can potentially reduce training latency and thereby achieve fast training convergence and/or reduce the communication overhead associated with the AI/ML model training procedure, as discussed in further detail herein.

In some embodiments, the AI/ML model training capability includes: i) a current processing capability of the first device; ii) a current volume of training data available for the iterative AI/ML model training process at the first device; and/or iii) a sensing capacity of the first device to collect training data for the iterative AI/ML model training process.

In some embodiments, the AI/ML model training capability of the first device includes an AI/ML model training capability type selected from among a predefined or configured hierarchy of AI/ML model training capability types.

In some embodiments, receiving the AI/ML model training capability from the first device includes receiving an index corresponding to the AI/ML model training capability type selected from among the predefined or configured hierarchy of AI/ML model training capability types.

In some embodiments, the method according to the second broad aspect of the present disclosure further includes transmitting control signaling scheduling transmission of data or control information for a given iteration of the AI/ML model training process. In such embodiments, receiving the AI/ML model training capability from the first device may include receiving the AI/ML model training capability from the first device after the control signaling scheduling the transmission of data or control information for the given iteration is transmitted.

In some embodiments, the control signaling scheduling the transmission of data or control information for the given iteration includes control information identifying a physical uplink control channel (PUCCH) resource to be used by the first device for the given iteration. In such embodiments, receiving the AI/ML model training capability from the first device may include receiving the AI/ML model training capability for the given iteration on the PUCCH resource.

In some embodiments, the control signaling scheduling the transmission of data or control information for the given iteration includes downlink control information (DCI), wherein the DCI indicates the PUCCH resource to be used by the first device for the given iteration.

In some embodiments, the data or control information includes AI/ML model update information from the second device including AI/ML model parameter updates based on training of an AI/ML model at the second device.

Receiving an AI/ML model training capability from the first device includes receiving a respective AI/ML model training capability from each device of a plurality of devices, inclusive of the first device. In such embodiments, the second device may transmit, based on the respective AI/ML model training capability received from each device of the plurality of devices, information enabling each device of the plurality of devices to determine, for each of at least one iteration of the AI/ML model training process, whether the device is to participate in the iteration.

Transmitting information enabling each device to determine, for each of at least one iteration of the AI/ML model training process, whether the device is to participate in the iteration includes transmitting control signaling for each device of the plurality of devices to configure each device of the plurality of devices with a device-specific rule for determining, for each iteration of the AI/ML model training process, whether the device is to participate in the iteration.

An iteration of the AI/ML model training process is associated with a respective value of an iteration identifier (ID) such that the respective value of the iteration ID is incremented by one for each subsequent iteration. In such embodiments, the device-specific rules that the plurality of devices are configured with may configure each device of the plurality of devices to selectively participate in a given iteration based on the respective value of the iteration ID associated with the given iteration.

In some embodiments, the method according to the second broad aspect of the present disclosure further includes, for an iteration of the AI/ML model training process, transmitting control information indicating the value of the iteration ID associated with the given iteration.

In some embodiments, transmitting information enabling the first device to determine, for each of at least one iteration of the AI/ML model training process, whether the first device is to participate in the iteration includes for an iteration of the AI/ML model training process, transmitting control information indicating at least one AI/ML model training capability type from among the predefined or configured hierarchy of AI/ML model training capability types that is to participate in the iteration.

Transmitting information enabling the first device to determine, for each of at least one iteration of the AI/ML model training process, whether the first device is to participate in the iteration includes transmitting first downlink control information (DCI) containing first scheduling information for scheduling transmission of data or control information for a given iteration of the AI/ML model training process. In such embodiments, a cyclic redundancy check (CRC) value of the first DCI may be scrambled with a first radio network temporary identifier (RNTI) and the second device may transmit control signaling to configure the first device to monitor for the first DCI in accordance with a first monitoring periodicity.

In some embodiments, the method according to the second broad aspect of the present disclosure further includes transmitting second DCI containing second scheduling information for scheduling transmission of other data or control information. In such embodiments, a CRC value of the second DCI may be scrambled with a second RNTI different from the first RNTI, and the second device may transmit device-specific control signaling to configure the first device to monitor for the second DCI in accordance with a second monitoring periodicity.

In some embodiments, the second monitoring periodicity is separately configured from the first monitoring periodicity.

In some embodiments, transmitting information enabling the first device to determine, for each of at least one iteration of the AI/ML model training process, whether the first device is to participate in the iteration further includes transmitting control signaling to configure a third device to monitor for the first DCI in accordance with a third monitoring periodicity different from the first monitoring periodicity.

In some embodiments, the first RNTI is different from a Cell RNTI (C-RNTI).

In some embodiments, the method according to the second broad aspect of the present disclosure further includes, for a given iteration of the AI/ML model training process, receiving local AI/ML model update information from the first device, the local AI/ML model update information from the first device including AI/ML model parameter updates based on training of a local AI/ML model at the first device, wherein the training of the local AI/ML model at the first device is based on data or control information transmitted from the second device for the given iteration of the AI/ML model training process. In such embodiments, the local AI/ML model update information from the first device may further include information indicating a value of an iteration ID associated with the given iteration for which the first device received the data or control information from the second device.

In some embodiments, the method according to the second broad aspect of the present disclosure further includes receiving a request to participate in the AI/ML model training process from the first device. For example, the request from the first device may include information indicating a value of an iteration ID associated with a given iteration of the AI/ML model training process.

In some embodiments, the method according to the second broad aspect of the present disclosure further includes transmitting control signaling for the first device to configure the first device to train a partial AI/ML model including a partial subset of parameters of a local AI/ML model at the first device.

In some embodiments, the method according to the second broad aspect of the present disclosure further includes receiving local AI/ML model update information from the first device, the local AI/ML model update information from the first device including AI/ML model parameter updates for the partial subset of parameters based on training of the partial AI/ML model at the first device.

In some embodiments, transmitting information enabling the first device to determine, for each of at least one iteration of the AI/ML model training process, whether the first device is to participate in the iteration includes transmitting, based on the AI/ML model training capability received from the first device, control signaling for the first device to configure the first device to not participate in the AI/ML model training process.

In some embodiments, the method according to the second broad aspect of the present disclosure further includes receiving a request from the first device to not participate in the AI/ML model training process.

Corresponding apparatuses and devices are disclosed for performing the methods.

For example, according to another aspect of the disclosure, a device is provided that includes a processor and a memory storing processor-executable instructions that, when executed, cause the processor to carry out a method according to the first broad aspect of the present disclosure described above.

As another example, according to another aspect of the disclosure, a device is provided that includes a processor and a memory storing processor-executable instructions that, when executed, cause the processor to carry out a method according to the second broad aspect of the present disclosure described above.

According to other aspects of the disclosure, an apparatus including one or more units for implementing any of the method aspects as disclosed in this disclosure is provided. The term "units" is used in a broad sense and may be referred to by any of various names, including for example, modules, components, elements, means, etc. The units can be implemented using hardware, software, firmware or any combination thereof.

As another example, corresponding apparatuses and devices are disclosed for performing the methods.

For example, according to another aspect of the disclosure, a device is provided that includes a processor and a memory storing processor-executable instructions that, when executed, cause the processor to carry out a method according to the first broad aspect of the present disclosure described above.

According to other aspects of the disclosure, a processor readable storage medium storing instructions, when the instructions executed by the processor, cause an apparatus to perform the first broad aspect as disclosed in this disclosure is provided.

### BRIEF DESCRIPTION OF THE DRAWINGS

Reference will now be made, by way of example only, to the accompanying drawings which show example embodiments of the present application, and in which:
FIG. 1 is a simplified schematic illustration of a communication system, according to one example;
FIG. 2 illustrates another example of a communication system;
FIG. 3 illustrates an example of an electronic device (ED), a terrestrial transmit and receive point (T-TRP), and a non-terrestrial transmit and receive point (NT-TRP);
FIG. 4 illustrates example units or modules in a device;
FIG. 5 illustrates illustrates four EDs communicating with a network device in a communication system, according to one embodiment;
FIG. 6A illustrates and example of a neural network with multiple layers of neurons, according to one embodiment;
FIG. 6B illustrates an example of a neuron that may be used as a building block for a neural network, according to one embodiment;
FIG. 7 illustrates a timeline of actions performed by four EDs for one iteration of a synchronous federated learning procedure;
FIG. 8 illustrates a timeline of actions performed by four EDs over multiple iterations of an asynchronous federated learning procedure;
FIG. 9 illustrates a timeline of actions performed by four EDs over multiple iterations of a quasi-synchronous federated learning procedure, according to one embodiment;
FIG. 10 illustrates an example of a flowchart for quasi-synchronous federated learning according to one embodiment;
FIG. 11 illustrates a timeline of actions performed by four EDs over multiple iterations of an asynchronous federated learning procedure, according to one embodiment
FIG. 12 illustrates an example of a flowchart for asynchronous federated learning according to one embodiment.

Similar reference numerals may have been used in different figures to denote similar components.

### DETAILED DESCRIPTION

For illustrative purposes, specific example embodiments will now be explained in greater detail below in conjunction with the figures.

### Example communication systems and devices

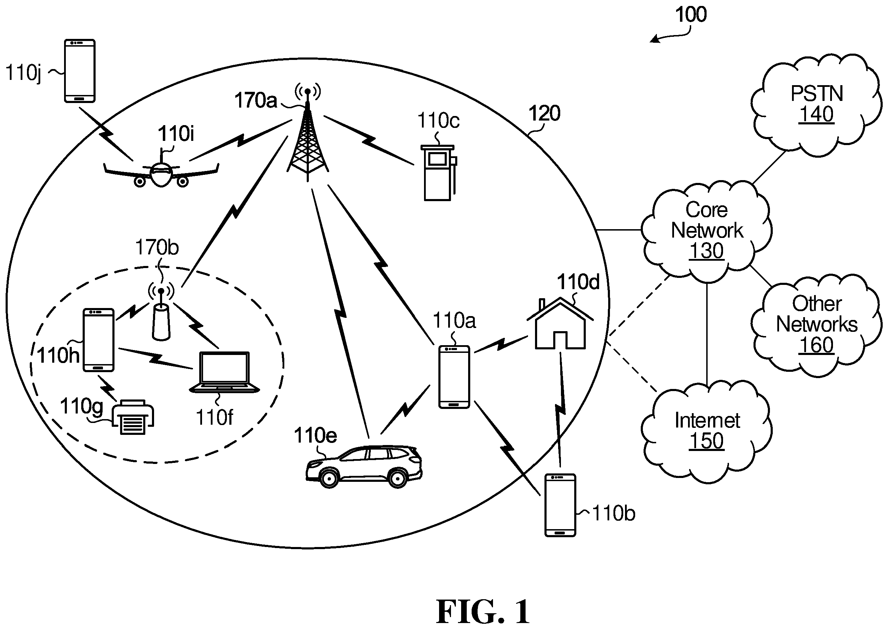

Referring to FIG.1, as an illustrative example without limitation, a simplified schematic illustration of a communication system is provided. The communication system 100 comprises a radio access network 120. The radio access network 120 may be a next generation (e.g. sixth generation (6G) or later) radio access network, or a legacy (e.g. 5G, 4G, 3G or 2G) radio access network. One or more communication electric device (ED) 110a-120j (generically referred to as 110) may be interconnected to one another or connected to one or more network nodes (170a, 170b, generically referred to as 170) in the radio access network 120. A core network130 may be a part of the communication system and may be dependent or independent of the radio access technology used in the communication system 100. Also, the communication system 100 comprises a public switched telephone network (PSTN) 140, the internet 150, and other networks 160.

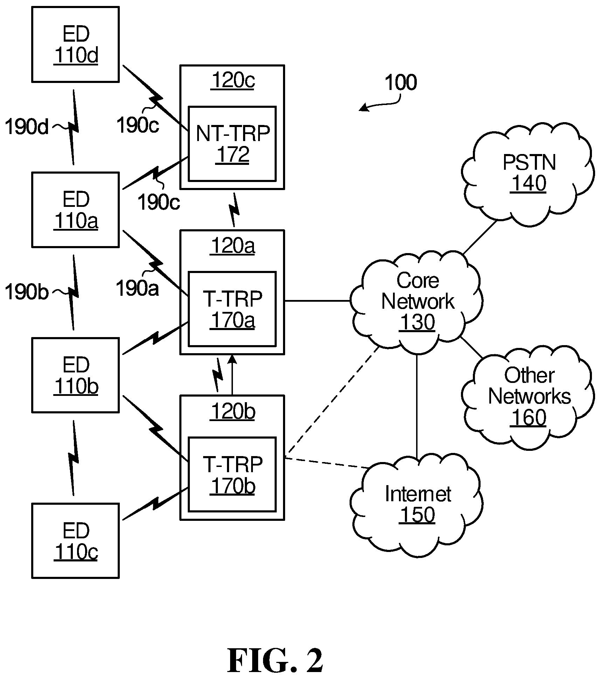

FIG. 2 illustrates an example communication system 100. In general, the communication system 100 enables multiple wireless or wired elements to communicate data and other content. The purpose of the communication system 100 may be to provide content, such as voice, data, video, and/or text, via broadcast, multicast and unicast, etc. The communication system 100 may operate by sharing resources, such as carrier spectrum bandwidth, between its constituent elements. The communication system 100 may include a terrestrial communication system and/or a non-terrestrial communication system. The communication system 100 may provide a wide range of communication services and applications (such as earth monitoring, remote sensing, passive sensing and positioning, navigation and tracking, autonomous delivery and mobility, etc.). The communication system 100 may provide a high degree of availability and robustness through a joint operation of the terrestrial communication system and the non-terrestrial communication system. For example, integrating a non-terrestrial communication system (or components thereof) into a terrestrial communication system can result in what may be considered a heterogeneous network comprising multiple layers. Compared to conventional communication networks, the heterogeneous network may achieve better overall performance through efficient multi-link joint operation, more flexible functionality sharing, and faster physical layer link switching between terrestrial networks and non- terrestrial networks.

The terrestrial communication system and the non-terrestrial communication system could be considered sub-systems of the communication system. In the example shown, the communication system 100 includes electronic devices (ED) 110a-110d (generically referred to as ED 110), radio access networks (RANs) 120a-120b, non-terrestrial communication network 120c, a core network 130, a public switched telephone network (PSTN) 140, the internet 150, and other networks 160. The RANs 120a-120b include respective base stations (BSs) 170a-170b, which may be generically referred to as terrestrial transmit and receive points (T-TRPs) 170a-170b. The non-terrestrial communication network 120c includes an access node 120c, which may be generically referred to as a non-terrestrial transmit and receive point (NT-TRP) 172.

Any ED 110 may be alternatively or additionally configured to interface, access, or communicate with any other T-TRP 170a-170b and NT-TRP 172, the internet 150, the core network 130, the PSTN 140, the other networks 160, or any combination of the preceding. In some examples, ED 110a may communicate an uplink and/or downlink transmission over an interface 190a with T-TRP 170a. In some examples, the EDs 110a, 110b and 110d may also communicate directly with one another via one or more sidelink air interfaces 190b. In some examples, ED 110d may communicate an uplink and/or downlink transmission over an interface 190c with NT-TRP 172.

The air interfaces 190a and 190b may use similar communication technology, such as any suitable radio access technology. For example, the communication system 100 may implement one or more channel access methods, such as code division multiple access (CDMA), time division multiple access (TDMA), frequency division multiple access (FDMA), orthogonal FDMA (OFDMA), or single-carrier FDMA (SC-FDMA) in the air interfaces 190a and 190b. The air interfaces 190a and 190b may utilize other higher dimension signal spaces, which may involve a combination of orthogonal and/or non-orthogonal dimensions.

The air interface 190c can enable communication between the ED 110d and one or multiple NT-TRPs 172 via a wireless link or simply a link. For some examples, the link is a dedicated connection for unicast transmission, a connection for broadcast transmission, or a connection between a group of EDs and one or multiple NT-TRPs for multicast transmission.

The RANs 120a and 120b are in communication with the core network 130 to provide the EDs 110a 110b, and 110c with various services such as voice, data, and other services. The RANs 120a and 120b and/or the core network 130 may be in direct or indirect communication with one or more other RANs (not shown), which may or may not be directly served by core network 130, and may or may not employ the same radio access technology as RAN 120a, RAN 120b or both. The core network 130 may also serve as a gateway access between (i) the RANs 120a and 120b or EDs 110a 110b, and 110c or both, and (ii) other networks (such as the PSTN 140, the internet 150, and the other networks 160). In addition, some or all of the EDs 110a 110b, and 110c may include functionality for communicating with different wireless networks over different wireless links using different wireless technologies and/or protocols. Instead of wireless communication (or in addition thereto), the EDs 110a 110b, and 110c may communicate via wired communication channels to a service provider or switch (not shown), and to the internet 150. PSTN 140 may include circuit switched telephone networks for providing plain old telephone service (POTS). Internet 150 may include a network of computers and subnets (intranets) or both, and incorporate protocols, such as Internet Protocol (IP), Transmission Control Protocol (TCP), User Datagram Protocol (UDP). EDs 110a 110b, and 110c may be multimode devices capable of operation according to multiple radio access technologies and incorporate multiple transceivers necessary to support such.

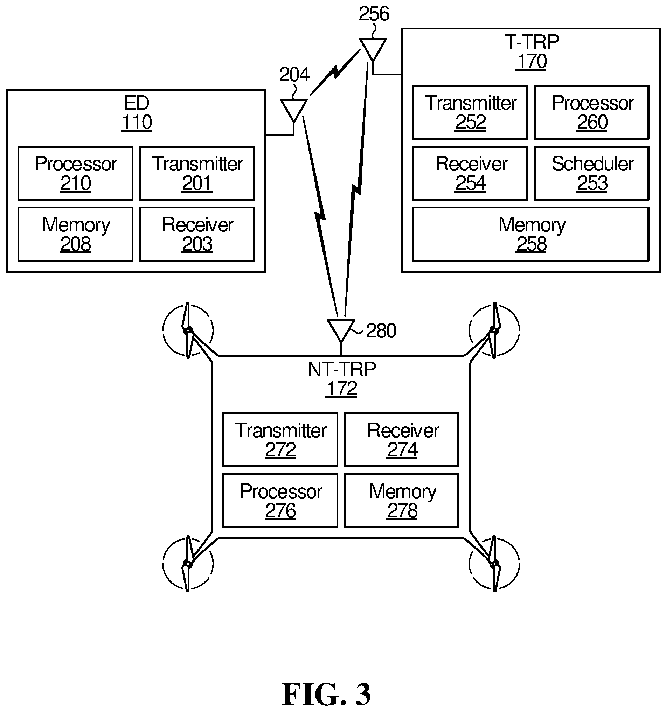

FIG. 3 illustrates another example of an ED 110 and a base station 170a, 170b and/or 170c. The ED 110 is used to connect persons, objects, machines, etc. The ED 110 may be widely used in various scenarios, for example, cellular communications, device-to-device (D2D), vehicle to everything (V2X), peer-to-peer (P2P), machine-to-machine (M2M), machine-type communications (MTC), internet of things (IOT), virtual reality (VR), augmented reality (AR), industrial control, self-driving, remote medical, smart grid, smart furniture, smart office, smart wearable, smart transportation, smart city, drones, robots, remote sensing, passive sensing, positioning, navigation and tracking, autonomous delivery and mobility, etc.

Each ED 110 represents any suitable end user device for wireless operation and may include such devices (or may be referred to) as a user equipment/device (UE), a wireless transmit/receive unit (WTRU), a mobile station, a fixed or mobile subscriber unit, a cellular telephone, a station (STA), a machine type communication (MTC) device, a personal digital assistant (PDA), a smartphone, a laptop, a computer, a tablet, a wireless sensor, a consumer electronics device, a smart book, a vehicle, a car, a truck, a bus, a train, or an IoT device, an industrial device, or apparatus (e.g. communication module, modem, or chip) in the forgoing devices, among other possibilities. Future generation EDs 110 may be referred to using other terms. The base station 170a and 170b is a T-TRP and will hereafter be referred to as T-TRP 170. Also shown in FIG.3, a NT-TRP will hereafter be referred to as NT-TRP 172. Each ED 110 connected to T-TRP 170 and/or NT-TRP 172 can be dynamically or semi-statically turned-on (i.e., established, activated, or enabled), turned-off (i.e., released, deactivated, or disabled) and/or configured in response to one of more of: connection availability and connection necessity.

The ED 110 includes a transmitter 201 and a receiver 203 coupled to one or more antennas 204. Only one antenna 204 is illustrated. One, some, or all of the antennas may alternatively be panels. The transmitter 201 and the receiver 203 may be integrated, e.g. as a transceiver. The transceiver is configured to modulate data or other content for transmission by at least one antenna 204 or network interface controller (NIC). The transceiver is also configured to demodulate data or other content received by the at least one antenna 204. Each transceiver includes any suitable structure for generating signals for wireless or wired transmission and/or processing signals received wirelessly or by wire. Each antenna 204 includes any suitable structure for transmitting and/or receiving wireless or wired signals.

The ED 110 includes at least one memory 208. The memory 208 stores instructions and data used, generated, or collected by the ED 110. For example, the memory 208 could store software instructions or modules configured to implement some or all of the functionality and/or embodiments described herein and that are executed by the processing unit(s) 210. Each memory 208 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, on-processor cache, and the like.

The ED 110 may further include one or more input/output devices (not shown) or interfaces (such as a wired interface to the internet 150 in FIG. 1). The input/output devices permit interaction with a user or other devices in the network. Each input/output device includes any suitable structure for providing information to or receiving information from a user, such as a speaker, microphone, keypad, keyboard, display, or touch screen, including network interface communications.

The ED 110 further includes a processor 210 for performing operations including those related to preparing a transmission for uplink transmission to the NT-TRP 172 and/or T-TRP 170, those related to processing downlink transmissions received from the NT-TRP 172 and/or T-TRP 170, and those related to processing sidelink transmission to and from another ED 110. Processing operations related to preparing a transmission for uplink transmission may include operations such as encoding, modulating, transmit beamforming, and generating symbols for transmission. Processing operations related to processing downlink transmissions may include operations such as receive beamforming, demodulating and decoding received symbols. Depending upon the embodiment, a downlink transmission may be received by the receiver 203, possibly using receive beamforming, and the processor 210 may extract signaling from the downlink transmission (e.g. by detecting and/or decoding the signaling). An example of signaling may be a reference signal transmitted by NT-TRP 172 and/or T-TRP 170. In some embodiments, the processor 276 implements the transmit beamforming and/or receive beamforming based on the indication of beam direction, e.g. beam angle information (BAI), received from T-TRP 170. In some embodiments, the processor 210 may perform operations relating to network access (e.g. initial access) and/or downlink synchronization, such as operations relating to detecting a synchronization sequence, decoding and obtaining the system information, etc. In some embodiments, the processor 210 may perform channel estimation, e.g. using a reference signal received from the NT-TRP 172 and/or T-TRP 170.

Although not illustrated, the processor 210 may form part of the transmitter 201 and/or receiver 203. Although not illustrated, the memory 208 may form part of the processor 210.

The processor 210, and the processing components of the transmitter 201 and receiver 203 may each be implemented by the same or different one or more processors that are configured to execute instructions stored in a memory (e.g. in memory 208). Alternatively, some or all of the processor 210, and the processing components of the transmitter 201 and receiver 203 may be implemented using dedicated circuitry, such as a programmed field-programmable gate array (FPGA), a graphical processing unit (GPU), or an application-specific integrated circuit (ASIC).

The T-TRP 170 may be known by other names in some implementations, such as a base station, a base transceiver station (BTS), a radio base station, a network node, a network device, a device on the network side, a transmit/receive node, a Node B, an evolved NodeB (eNodeB or eNB), a Home eNodeB, a next Generation NodeB (gNB), a transmission point (TP) ), a site controller, an access point (AP), or a wireless router, a relay station, a remote radio head, a terrestrial node, a terrestrial network device, or a terrestrial base station, base band unit (BBU), remote radio unit (RRU), active antenna unit (AAU), remote radio head (RRH), central unit (CU), distribute unit (DU), positioning node, among other possibilities. The T-TRP 170 may be macro BSs, pico BSs, relay node, donor node, or the like, or combinations thereof. The T-TRP 170 may refer to the forging devices or apparatus (e.g. communication module, modem, or chip) in the forgoing devices.

In some embodiments, the parts of the T-TRP 170 may be distributed. For example, some of the modules of the T-TRP 170 may be located remote from the equipment housing the antennas of the T-TRP 170, and may be coupled to the equipment housing the antennas over a communication link (not shown) sometimes known as front haul, such as common public radio interface (CPRI). Therefore, in some embodiments, the term T-TRP 170 may also refer to modules on the network side that perform processing operations, such as determining the location of the ED 110, resource allocation (scheduling), message generation, and encoding/decoding, and that are not necessarily part of the equipment housing the antennas of the T-TRP 170. The modules may also be coupled to other T-TRPs. In some embodiments, the T-TRP 170 may actually be a plurality of T-TRPs that are operating together to serve the ED 110, e.g. through coordinated multipoint transmissions.

The T-TRP 170 includes at least one transmitter 252 and at least one receiver 254 coupled to one or more antennas 256. Only one antenna 256 is illustrated. One, some, or all of the antennas may alternatively be panels. The transmitter 252 and the receiver 254 may be integrated as a transceiver. The T-TRP 170 further includes a processor 260 for performing operations including those related to: preparing a transmission for downlink transmission to the ED 110, processing an uplink transmission received from the ED 110, preparing a transmission for backhaul transmission to NT-TRP 172, and processing a transmission received over backhaul from the NT-TRP 172. Processing operations related to preparing a transmission for downlink or backhaul transmission may include operations such as encoding, modulating, precoding (e.g. MIMO precoding), transmit beamforming, and generating symbols for transmission. Processing operations related to processing received transmissions in the uplink or over backhaul may include operations such as receive beamforming, and demodulating and decoding received symbols. The processor 260 may also perform operations relating to network access (e.g. initial access) and/or downlink synchronization, such as generating the content of synchronization signal blocks (SSBs), generating the system information, etc. In some embodiments, the processor 260 also generates the indication of beam direction, e.g. BAI, which may be scheduled for transmission by scheduler 253. The processor 260 performs other network-side processing operations described herein, such as determining the location of the ED 110, determining where to deploy NT-TRP 172, etc. In some embodiments, the processor 260 may generate signaling, e.g. to configure one or more parameters of the ED 110 and/or one or more parameters of the NT-TRP 172. Any signaling generated by the processor 260 is sent by the transmitter 252. Note that "signaling", as used herein, may alternatively be called control signaling. Dynamic signaling may be transmitted in a control channel, e.g. a physical downlink control channel (PDCCH), and static or semi-static higher layer signaling may be included in a packet transmitted in a data channel, e.g. in a physical downlink shared channel (PDSCH).

A scheduler 253 may be coupled to the processor 260. The scheduler 253 may be included within or operated separately from the T-TRP 170, which may schedule uplink, downlink, and/or backhaul transmissions, including issuing scheduling grants and/or configuring scheduling-free ("configured grant") resources. The T-TRP 170 further includes a memory 258 for storing information and data. The memory 258 stores instructions and data used, generated, or collected by the T-TRP 170. For example, the memory 258 could store software instructions or modules configured to implement some or all of the functionality and/or embodiments described herein and that are executed by the processor 260.

Although not illustrated, the processor 260 may form part of the transmitter 252 and/or receiver 254. Also, although not illustrated, the processor 260 may implement the scheduler 253. Although not illustrated, the memory 258 may form part of the processor 260.

The processor 260, the scheduler 253, and the processing components of the transmitter 252 and receiver 254 may each be implemented by the same or different one or more processors that are configured to execute instructions stored in a memory, e.g. in memory 258. Alternatively, some or all of the processor 260, the scheduler 253, and the processing components of the transmitter 252 and receiver 254 may be implemented using dedicated circuitry, such as a FPGA, a GPU, or an ASIC.

Although the NT-TRP 172 is illustrated as a drone only as an example, the NT-TRP 172 may be implemented in any suitable non-terrestrial form. Also, the NT-TRP 172 may be known by other names in some implementations, such as a non-terrestrial node, a non-terrestrial network device, or a non-terrestrial base station. The NT-TRP 172 includes a transmitter 272 and a receiver 274 coupled to one or more antennas 280. Only one antenna 280 is illustrated. One, some, or all of the antennas may alternatively be panels. The transmitter 272 and the receiver 274 may be integrated as a transceiver. The NT-TRP 172 further includes a processor 276 for performing operations including those related to: preparing a transmission for downlink transmission to the ED 110, processing an uplink transmission received from the ED 110, preparing a transmission for backhaul transmission to T-TRP 170, and processing a transmission received over backhaul from the T-TRP 170. Processing operations related to preparing a transmission for downlink or backhaul transmission may include operations such as encoding, modulating, precoding (e.g. MIMO precoding), transmit beamforming, and generating symbols for transmission. Processing operations related to processing received transmissions in the uplink or over backhaul may include operations such as receive beamforming, and demodulating and decoding received symbols. In some embodiments, the processor 276 implements the transmit beamforming and/or receive beamforming based on beam direction information (e.g. BAI) received from T-TRP 170. In some embodiments, the processor 276 may generate signaling, e.g. to configure one or more parameters of the ED 110. In some embodiments, the NT-TRP 172 implements physical layer processing, but does not implement higher layer functions such as functions at the medium access control (MAC) or radio link control (RLC) layer. As this is only an example, more generally, the NT-TRP 172 may implement higher layer functions in addition to physical layer processing.

The NT-TRP 172 further includes a memory 278 for storing information and data. Although not illustrated, the processor 276 may form part of the transmitter 272 and/or receiver 274. Although not illustrated, the memory 278 may form part of the processor 276.

The processor 276 and the processing components of the transmitter 272 and receiver 274 may each be implemented by the same or different one or more processors that are configured to execute instructions stored in a memory, e.g. in memory 278. Alternatively, some or all of the processor 276 and the processing components of the transmitter 272 and receiver 274 may be implemented using dedicated circuitry, such as a programmed FPGA, a GPU, or an ASIC. In some embodiments, the NT-TRP 172 may actually be a plurality of NT-TRPs that are operating together to serve the ED 110, e.g. through coordinated multipoint transmissions.

Note that "TRP", as used herein, may refer to a T-TRP or a NT-TRP.

The T-TRP 170, the NT-TRP 172, and/or the ED 110 may include other components, but these have been omitted for the sake of clarity.

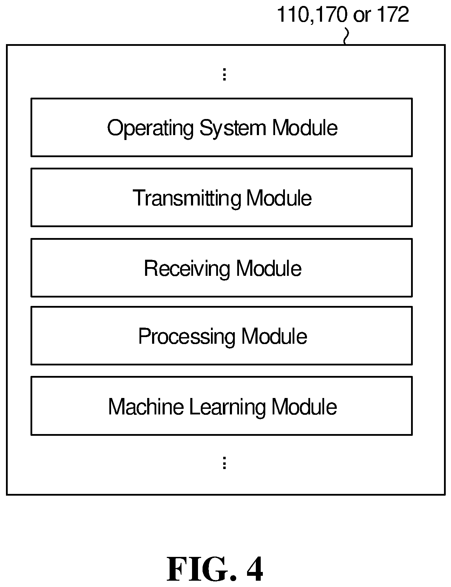

One or more steps of the embodiment methods provided herein may be performed by corresponding units or modules, according to FIG. 4. FIG. 4 illustrates units or modules in a device, such as in ED 110, in T-TRP 170, or in NT-TRP 172. For example, a signal may be transmitted by a transmitting unit or a transmitting module. For example, a signal may be transmitted by a transmitting unit or a transmitting module. A signal may be received by a receiving unit or a receiving module. A signal may be processed by a processing unit or a processing module. Other steps may be performed by an artificial intelligence (AI) or machine learning (ML) module. The respective units or modules may be implemented using hardware, one or more components or devices that execute software, or a combination thereof. For instance, one or more of the units or modules may be an integrated circuit, such as a programmed FPGA, a GPU, or an ASIC. It will be appreciated that where the modules are implemented using software for execution by a processor for example, they may be retrieved by a processor, in whole or part as needed, individually or together for processing, in single or multiple instances, and that the modules themselves may include instructions for further deployment and instantiation.

Additional details regarding the EDs 110, T-TRP 170, and NT-TRP 172 are known to those of skill in the art. As such, these details are omitted here.

Control signaling is discussed herein in some embodiments. Control signaling may sometimes instead be referred to as signaling, or control information, or configuration information, or a configuration. In some cases, control signaling may be dynamically indicated, e.g. in the physical layer in a control channel. An example of control signaling that is dynamically indicated is information sent in physical layer control signaling, e.g. downlink control information (DCI). Control signaling may sometimes instead be semi-statically indicated, e.g. in RRC signaling or in a MAC control element (CE). A dynamic indication may be an indication in lower layer, e.g. physical layer / layer 1 signaling (e.g. in DCI), rather than in a higher-layer (e.g. rather than in RRC signaling or in a MAC CE). A semi-static indication may be an indication in semi-static signaling. Semi-static signaling, as used herein, may refer to signaling that is not dynamic, e.g. higher-layer signaling, RRC signaling, and/or a MAC CE. Dynamic signaling, as used herein, may refer to signaling that is dynamic, e.g. physical layer control signaling sent in the physical layer, such as DCI.

An air interface generally includes a number of components and associated parameters that collectively specify how a transmission is to be sent and/or received over a wireless communications link between two or more communicating devices. For example, an air interface may include one or more components defining the waveform(s), frame structure(s), multiple access scheme(s), protocol(s), coding scheme(s) and/or modulation scheme(s) for conveying information (e.g. data) over a wireless communications link. The wireless communications link may support a link between a radio access network and user equipment (e.g. a "Uu" link), and/or the wireless communications link may support a link between device and device, such as between two user equipments (e.g. a "sidelink"), and/or the wireless communications link may support a link between a non-terrestrial (NT)-communication network and user equipment (UE). The followings are some examples for the above components:
- A waveform component may specify a shape and form of a signal being transmitted. Waveform options may include orthogonal multiple access waveforms and non-orthogonal multiple access waveforms. Non-limiting examples of such waveform options include Orthogonal Frequency Division Multiplexing (OFDM), Filtered OFDM (f-OFDM), Time windowing OFDM, Filter Bank Multicarrier (FBMC), Universal Filtered Multicarrier (UFMC), Generalized Frequency Division Multiplexing (GFDM), Wavelet Packet Modulation (WPM), Faster Than Nyquist (FTN) Waveform, and low Peak to Average Power Ratio Waveform (low PAPR WF).
- A frame structure component may specify a configuration of a frame or group of frames. The frame structure component may indicate one or more of a time, frequency, pilot signature, code, or other parameter of the frame or group of frames. More details of frame structure will be discussed below.
- A multiple access scheme component may specify multiple access technique options, including technologies defining how communicating devices share a common physical channel, such as: Time Division Multiple Access (TDMA), Frequency Division Multiple Access (FDMA), Code Division Multiple Access (CDMA), Single Carrier Frequency Division Multiple Access (SC-FDMA), Low Density Signature Multicarrier Code Division Multiple Access (LDS-MC-CDMA), Non-Orthogonal Multiple Access (NOMA), Pattern Division Multiple Access (PDMA), Lattice Partition Multiple Access (LPMA), Resource Spread Multiple Access (RSMA), and Sparse Code Multiple Access (SCMA). Furthermore, multiple access technique options may include: scheduled access vs. non-scheduled access, also known as grant-free access; non-orthogonal multiple access vs. orthogonal multiple access, e.g., via a dedicated channel resource (e.g., no sharing between multiple communicating devices); contention-based shared channel resources vs. non-contention-based shared channel resources, and cognitive radio-based access.
- A hybrid automatic repeat request (HARQ) protocol component may specify how a transmission and/or a re-transmission is to be made. Non-limiting examples of transmission and/or re-transmission mechanism options include those that specify a scheduled data pipe size, a signaling mechanism for transmission and/or re-transmission, and a re-transmission mechanism.
- A coding and modulation component may specify how information being transmitted may be encoded/decoded and modulated/demodulated for transmission/reception purposes. Coding may refer to methods of error detection and forward error correction. Non-limiting examples of coding options include turbo trellis codes, turbo product codes, fountain codes, low-density parity check codes, and polar codes. Modulation may refer, simply, to the constellation (including, for example, the modulation technique and order), or more specifically to various types of advanced modulation methods such as hierarchical modulation and low PAPR modulation.

In some embodiments, the air interface may be a "one-size-fits-all concept". For example, the components within the air interface cannot be changed or adapted once the air interface is defined. In some implementations, only limited parameters or modes of an air interface, such as a cyclic prefix (CP) length or a multiple input multiple output (MIMO) mode, can be configured. In some embodiments, an air interface design may provide a unified or flexible framework to support below 6GHz and beyond 6GHz frequency (e.g., mmWave) bands for both licensed and unlicensed access. As an example, flexibility of a configurable air interface provided by a scalable numerology and symbol duration may allow for transmission parameter optimization for different spectrum bands and for different services/devices. As another example, a unified air interface may be self-contained in a frequency domain, and a frequency domain self-contained design may support more flexible radio access network (RAN) slicing through channel resource sharing between different services in both frequency and time.

### Frame Structure

A frame structure is a feature of the wireless communication physical layer that defines a time domain signal transmission structure, e.g. to allow for timing reference and timing alignment of basic time domain transmission units. Wireless communication between communicating devices may occur on time-frequency resources governed by a frame structure. The frame structure may sometimes instead be called a radio frame structure.

Depending upon the frame structure and/or configuration of frames in the frame structure, frequency division duplex (FDD) and/or time-division duplex (TDD) and/or full duplex (FD) communication may be possible. FDD communication is when transmissions in different directions (e.g. uplink vs. downlink) occur in different frequency bands. TDD communication is when transmissions in different directions (e.g. uplink vs. downlink) occur over different time durations. FD communication is when transmission and reception occurs on the same time-frequency resource, i.e. a device can both transmit and receive on the same frequency resource concurrently in time.

One example of a frame structure is a frame structure in long-term evolution (LTE) having the following specifications: each frame is 10ms in duration; each frame has 10 subframes, which are each 1ms in duration; each subframe includes two slots, each of which is 0.5ms in duration; each slot is for transmission of 7 OFDM symbols (assuming normal CP); each OFDM symbol has a symbol duration and a particular bandwidth (or partial bandwidth or bandwidth partition) related to the number of subcarriers and subcarrier spacing; the frame structure is based on OFDM waveform parameters such as subcarrier spacing and CP length (where the CP has a fixed length or limited length options); and the switching gap between uplink and downlink in TDD has to be the integer time of OFDM symbol duration.

Another example of a frame structure is a frame structure in new radio (NR) having the following specifications: multiple subcarrier spacings are supported, each subcarrier spacing corresponding to a respective numerology; the frame structure depends on the numerology, but in any case the frame length is set at 10ms, and consists of ten subframes of 1ms each; a slot is defined as 14 OFDM symbols, and slot length depends upon the numerology. For example, the NR frame structure for normal CP 15 kHz subcarrier spacing ("numerology 1") and the NR frame structure for normal CP 30 kHz subcarrier spacing ("numerology 2") are different. For 15 kHz subcarrier spacing a slot length is 1ms, and for 30 kHz subcarrier spacing a slot length is 0.5ms. The NR frame structure may have more flexibility than the LTE frame structure.

Another example of a frame structure is an example flexible frame structure, e.g. for use in a 6G network or later. In a flexible frame structure, a symbol block may be defined as the minimum duration of time that may be scheduled in the flexible frame structure. A symbol block may be a unit of transmission having an optional redundancy portion (e.g. CP portion) and an information (e.g. data) portion. An OFDM symbol is an example of a symbol block. A symbol block may alternatively be called a symbol. Embodiments of flexible frame structures include different parameters that may be configurable, e.g. frame length, subframe length, symbol block length, etc. A non-exhaustive list of possible configurable parameters in some embodiments of a flexible frame structure include:
(1) Frame: The frame length need not be limited to 10ms, and the frame length may be configurable and change over time. In some embodiments, each frame includes one or multiple downlink synchronization channels and/or one or multiple downlink broadcast channels, and each synchronization channel and/or broadcast channel may be transmitted in a different direction by different beamforming. The frame length may be more than one possible value and configured based on the application scenario. For example, autonomous vehicles may require relatively fast initial access, in which case the frame length may be set as 5ms for autonomous vehicle applications. As another example, smart meters on houses may not require fast initial access, in which case the frame length may be set as 20ms for smart meter applications.
(2) Subframe duration: A subframe might or might not be defined in the flexible frame structure, depending upon the implementation. For example, a frame may be defined to include slots, but no subframes. In frames in which a subframe is defined, e.g. for time domain alignment, then the duration of the subframe may be configurable. For example, a subframe may be configured to have a length of 0.1 ms or 0.2 ms or 0.5 ms or 1 ms or 2 ms or 5 ms, etc. In some embodiments, if a subframe is not needed in a particular scenario, then the subframe length may be defined to be the same as the frame length or not defined.
(3) Slot configuration: A slot might or might not be defined in the flexible frame structure, depending upon the implementation. In frames in which a slot is defined, then the definition of a slot (e.g. in time duration and/or in number of symbol blocks) may be configurable. In one embodiment, the slot configuration is common to all UEs or a group of UEs. For this case, the slot configuration information may be transmitted to UEs in a broadcast channel or common control channel(s). In other embodiments, the slot configuration may be UE specific, in which case the slot configuration information may be transmitted in a UE-specific control channel. In some embodiments, the slot configuration signaling can be transmitted together with frame configuration signaling and/or subframe configuration signaling. In other embodiments, the slot configuration can be transmitted independently from the frame configuration signaling and/or subframe configuration signaling. In general, the slot configuration may be system common, base station common, UE group common, or UE specific.
(4) Subcarrier spacing (SCS): SCS is one parameter of scalable numerology which may allow the SCS to possibly range from 15 KHz to 480 KHz. The SCS may vary with the frequency of the spectrum and/or maximum UE speed to minimize the impact of the Doppler shift and phase noise. In some examples, there may be separate transmission and reception frames, and the SCS of symbols in the reception frame structure may be configured independently from the SCS of symbols in the transmission frame structure. The SCS in a reception frame may be different from the SCS in a transmission frame. In some examples, the SCS of each transmission frame may be half the SCS of each reception frame. If the SCS between a reception frame and a transmission frame is different, the difference does not necessarily have to scale by a factor of two, e.g. if more flexible symbol durations are implemented using inverse discrete Fourier transform (IDFT) instead of fast Fourier transform (FFT). Additional examples of frame structures can be used with different SCSs.
(5) Flexible transmission duration of basic transmission unit: The basic transmission unit may be a symbol block (alternatively called a symbol), which in general includes a redundancy portion (referred to as the CP) and an information (e.g. data) portion, although in some embodiments the CP may be omitted from the symbol block. The CP length may be flexible and configurable. The CP length may be fixed within a frame or flexible within a frame, and the CP length may possibly change from one frame to another, or from one group of frames to another group of frames, or from one subframe to another subframe, or from one slot to another slot, or dynamically from one scheduling to another scheduling. The information (e.g. data) portion may be flexible and configurable. Another possible parameter relating to a symbol block that may be defined is ratio of CP duration to information (e.g. data) duration. In some embodiments, the symbol block length may be adjusted according to: channel condition (e.g. mulit-path delay, Doppler); and/or latency requirement; and/or available time duration. As another example, a symbol block length may be adjusted to fit an available time duration in the frame.
(6) Flexible switch gap: A frame may include both a downlink portion for downlink transmissions from a base station, and an uplink portion for uplink transmissions from UEs. A gap may be present between each uplink and downlink portion, which is referred to as a switching gap. The switching gap length (duration) may be configurable. A switching gap duration may be fixed within a frame or flexible within a frame, and a switching gap duration may possibly change from one frame to another, or from one group of frames to another group of frames, or from one subframe to another subframe, or from one slot to another slot, or dynamically from one scheduling to another scheduling.

### Cell/Carrier/Bandwidth Parts (BWPs)/Occupied Bandwidth

A device, such as a base station, may provide coverage over a cell. Wireless communication with the device may occur over one or more carrier frequencies. A carrier frequency will be referred to as a carrier. A carrier may alternatively be called a component carrier (CC). A carrier may be characterized by its bandwidth and a reference frequency, e.g. the center or lowest or highest frequency of the carrier. A carrier may be on licensed or unlicensed spectrum. Wireless communication with the device may also or instead occur over one or more bandwidth parts (BWPs). For example, a carrier may have one or more BWPs. More generally, wireless communication with the device may occur over spectrum. The spectrum may comprise one or more carriers and/or one or more BWPs.

A cell may include one or multiple downlink resources and optionally one or multiple uplink resources, or a cell may include one or multiple uplink resources and optionally one or multiple downlink resources, or a cell may include both one or multiple downlink resources and one or multiple uplink resources. As an example, a cell might only include one downlink carrier/BWP, or only include one uplink carrier/BWP, or include multiple downlink carriers/BWPs, or include multiple uplink carriers/BWPs, or include one downlink carrier/BWP and one uplink carrier/BWP, or include one downlink carrier/BWP and multiple uplink carriers/BWPs, or include multiple downlink carriers/BWPs and one uplink carrier/BWP, or include multiple downlink carriers/BWPs and multiple uplink carriers/BWPs. In some embodiments, a cell may instead or additionally include one or multiple sidelink resources, including sidelink transmitting and receiving resources.

A BWP is a set of contiguous or non-contiguous frequency subcarriers on a carrier, or a set of contiguous or non-contiguous frequency subcarriers on multiple carriers, or a set of non-contiguous or contiguous frequency subcarriers, which may have one or more carriers.

In some embodiments, a carrier may have one or more BWPs, e.g. a carrier may have a bandwidth of 20 MHz and consist of one BWP, or a carrier may have a bandwidth of 80 MHz and consist of two adjacent contiguous BWPs, etc. In other embodiments, a BWP may have one or more carriers, e.g. a BWP may have a bandwidth of 40 MHz and consists of two adjacent contiguous carriers, where each carrier has a bandwidth of 20 MHz. In some embodiments, a BWP may comprise non-contiguous spectrum resources which consists of non-contiguous multiple carriers, where the first carrier of the non-contiguous multiple carriers may be in mmW band, the second carrier may be in a low band (such as 2GHz band), the third carrier (if it exists) may be in THz band, and the fourth carrier (if it exists) may be in visible light band. Resources in one carrier which belong to the BWP may be contiguous or non-contiguous. In some embodiments, a BWP has non-contiguous spectrum resources on one carrier.

Wireless communication may occur over an occupied bandwidth. The occupied bandwidth may be defined as the width of a frequency band such that, below the lower and above the upper frequency limits, the mean powers emitted are each equal to a specified percentage /2 of the total mean transmitted power, for example, the value of /2 is taken as 0.5%.

The carrier, the BWP, or the occupied bandwidth may be signaled by a network device (e.g. base station) dynamically, e.g. in physical layer control signaling such as Downlink Control Information (DCI), or semi-statically, e.g. in radio resource control (RRC) signaling or in the medium access control (MAC) layer, or be predefined based on the application scenario; or be determined by the UE as a function of other parameters that are known by the UE, or may be fixed, e.g. by a standard.

### Artificial Intelligence (AI) and/ or Machine Learning (ML)

The number of new devices in future wireless networks is expected to increase exponentially and the functionalities of the devices are expected to become increasingly diverse. Also, many new applications and use cases are expected to emerge with more diverse quality of service demands than those of 5G applications/use cases. These will result in new key performance indications (KPIs) for future wireless networks (for example, a 6G network) that can be extremely challenging. AI technologies, such as ML technologies (e.g., deep learning), have been introduced to telecommunication applications with the goal of improving system performance and efficiency.

In addition, advances continue to be made in antenna and bandwidth capabilities, thereby allowing for possibly more and/or better communication over a wireless link. Additionally, advances continue in the field of computer architecture and computational power, e.g. with the introduction of general-purpose graphics processing units (GP-GPUs). Future generations of communication devices may have more computational and/or communication ability than previous generations, which may allow for the adoption of AI for implementing air interface components. Future generations of networks may also have access to more accurate and/or new information (compared to previous networks) that may form the basis of inputs to AI models, e.g.: the physical speed/velocity at which a device is moving, a link budget of the device, the channel conditions of the device, one or more device capabilities and/or a service type that is to be supported, sensing information, and/or positioning information, etc. To obtain sensing information, a TRP may transmit a signal to target object (e.g. a suspected UE), and based on the reflection of the signal the TRP or another network device computes the angle (for beamforming for the device), the distance of the device from the TRP, and/or doppler shifting information. Positioning information is sometimes referred to as localization, and it may be obtained in a variety of ways, e.g. a positioning report from a UE (such as a report of the UE's GPS coordinates), use of positioning reference signals (PRS), using the sensing described above, tracking and/or predicting the position of the device, etc.

AI technologies (which encompass ML technologies) may be applied in communication, including AI-based communication in the physical layer and/or AI-based communication in the MAC layer. For the physical layer, the AI communication may aim to optimize component design and/or improve the algorithm performance. For example, AI may be applied in relation to the implementation of: channel coding, channel modelling, channel estimation, channel decoding, modulation, demodulation, MIMO, waveform, multiple access, physical layer element parameter optimization and update, beam forming, tracking, sensing, and/or positioning, etc. For the MAC layer, the AI communication may aim to utilize the AI capability for learning, prediction, and/or making a decision to solve a complicated optimization problem with possible better strategy and/or optimal solution, e.g. to optimize the functionality in the MAC layer. For example, AI may be applied to implement: intelligent TRP management, intelligent beam management, intelligent channel resource allocation, intelligent power control, intelligent spectrum utilization, intelligent MCS, intelligent HARQ strategy, and/or intelligent transmission/reception mode adaption, etc.

In some embodiments, an AI architecture may involve multiple nodes, where the multiple nodes may possibly be organized in one of two modes, i.e., centralized and distributed, both of which may be deployed in an access network, a core network, or an edge computing system or third party network. A centralized training and computing architecture are restricted by possibly large communication overhead and strict user data privacy. A distributed training and computing architecture may comprise several frameworks, e.g., distributed machine learning and federated learning. In some embodiments, an AI architecture may comprise an intelligent controller which can perform as a single agent or a multi-agent, based on joint optimization or individual optimization. New protocols and signaling mechanisms are desired so that the corresponding interface link can be personalized with customized parameters to meet particular requirements while minimizing signaling overhead and maximizing the whole system spectrum efficiency by personalized AI technologies.

In some embodiments herein, new protocols and signaling mechanisms are provided for operating within and switching between different modes of operation for AI training, including between training and normal operation modes, and for measurement and feedback to accommodate the different possible measurements and information that may need to be fed back, depending upon the implementation.

### AI Training

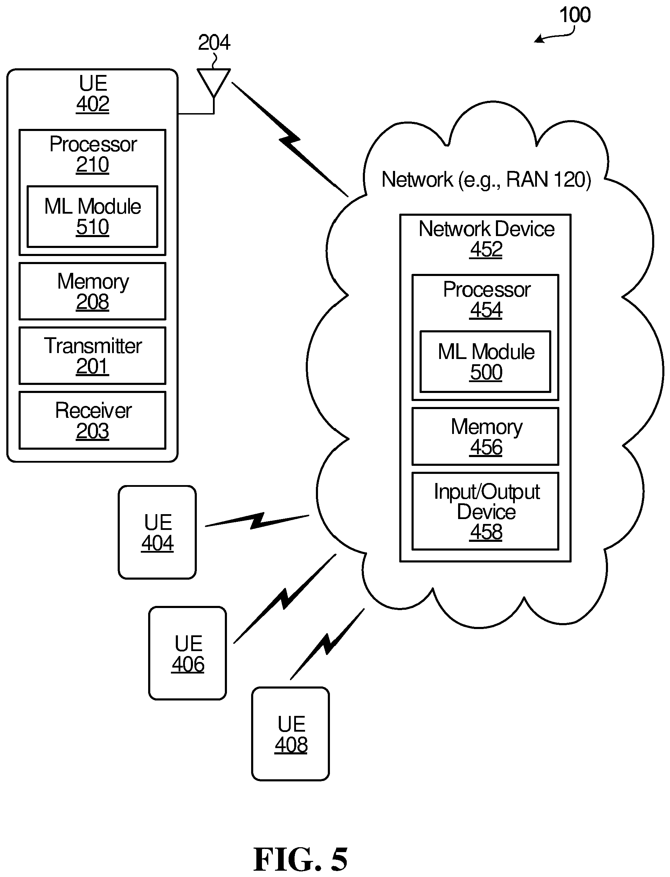

Referring again to FIGs. 1 and 2, embodiments of the present disclosure may be used to implement AI training involving two or more communicating devices in the communication system 100. For example, FIG. 5 illustrates four EDs communicating with a network device 452 in the communication system 100, according to one embodiment. The four EDs are each illustrated as a respective different UE, and will hereafter be referred to as UEs 402, 404, 406, and 408. However, the EDs do not necessarily need to be UEs.

The network device 452 is part of a network (e.g. a radio access network 120). The network device 452 may be deployed in an access network, a core network, or an edge computing system or third-party network, depending upon the implementation. The network device 452 might be (or be part of) a T-TRP or a server. In one example, the network device 452 can be (or be implemented within) T-TRP 170 or NT-TRP 172. In another example, the network device 452 can be a T-TRP controller and/or a NT-TRP controller which can manage T-TRP 170 or NT-TRP 172. In some embodiments, the components of the network device 452 might be distributed. The UEs 402, 404, 406, and 408 might directly communicate with the network device 452, e.g. if the network device 452 is part of a T-TRP serving the UEs 402, 404, 406, and 408. Alternatively, the UEs 402, 404, 406, and 408 might communicate with the network device 352 via one or more intermediary components, e.g. via a T-TRP and/or via a NT-TRP, etc. For example, the network device 452 may send and/or receive information (e.g. control signaling, data, training sequences, etc.) to/from one or more of the UEs 402, 404, 406, and 408 via a backhaul link and wireless channel interposed between the network device 452 and the UEs 402, 404, 406, and 408.

Each UE 402, 404, 406, and 408 includes a respective processor 210, memory 208, transmitter 201, receiver 203, and one or more antennas 204 (or alternatively panels), as described above. Only the processor 210, memory 208, transmitter 201, receiver 203, and antenna 204 for UE 402 are illustrated for simplicity, but the other UEs 404, 406, and 408 also include the same respective components.

For each UE 402, 404, 406, and 408, the communications link between that UE and a respective TRP in the network is an air interface. The air interface generally includes a number of components and associated parameters that collectively specify how a transmission is to be sent and/or received over the wireless medium.

The processor 210 of a UE in FIG. 5 implements one or more air interface components on the UE-side. The air interface components configure and/or implement transmission and/or reception over the air interface. Examples of air interface components are described herein. An air interface component might be in the physical layer, e.g. a channel encoder (or decoder) implementing the coding component of the air interface for the UE, and/or a modulator (or demodulator) implementing the modulation component of the air interface for the UE, and/or a waveform generator implementing the waveform component of the air interface for the UE, etc. An air interface component might be in or part of a higher layer, such as the MAC layer, e.g. a module that implements channel prediction/tracking, and/or a module that implements a retransmission protocol (e.g. that implements the HARQ protocol component of the air interface for the UE), etc. The processor 210 also directly performs (or controls the UE to perform) the UE-side operations described herein.

The network device 452 includes a processor 454, a memory 456, and an input/output device 458. The processor 454 implements or instructs other network devices (e.g. T-TRPs) to implement one or more of the air interface components on the network side. An air interface component may be implemented differently on the network-side for one UE compared to another UE. The processor 454 directly performs (or controls the network components to perform) the network-side operations described herein.

The processor 454 may be implemented by the same or different one or more processors that are configured to execute instructions stored in a memory (e.g. in memory 456). Alternatively, some or all of the processor 454 may be implemented using dedicated circuitry, such as a programmed FPGA, a GPU, or an ASIC. The memory 456 may be implemented by volatile and/or non-volatile storage. Any suitable type of memory may be used, such as RAM, ROM, hard disk, optical disc, on-processor cache, and the like.

The input/output device 458 permits interaction with other devices by receiving (inputting) and transmitting (outputting) information. In some embodiments, the input/output device 458 may be implemented by a transmitter and/or a receiver (or a transceiver), and/or one or more interfaces (such as a wired interface, e.g. to an internal network or to the internet, etc). In some implementations, the input/output device 458 may be implemented by a network interface, which may possibly be implemented as a network interface card (NIC), and/or a computer port (e.g. a physical outlet to which a plug or cable connects), and/or a network socket, etc., depending upon the implementation.

The network device 452 and the UE 402 have the ability to implement one or more AI-enabled processes. In particular, in the embodiment in FIG. 5 the network device 452 and the UE 402 include ML modules 410 and 460, respectively. The ML module 410 is implemented by processor 210 of UE 402 and the ML module 460 is implemented by processor 454 of network device 452 and therefore the ML module 410 is shown as being within processor 210 and the ML module 460 is shown as being with processor 454 in FIG. 5. The ML modules 410 and 460 execute one or more AI/ML algorithms to perform one or more AI-enabled processes, e.g., Al-enabled link adaptation to optimize communication links between the network and the UE 402, for example.

The ML modules 410 and 460 may be implemented using an AI model. The term AI model may refer to a computer algorithm that is configured to accept defined input data and output defined inference data, in which parameters (e.g., weights) of the algorithm can be updated and optimized through training (e.g., using a training dataset, or using real-life collected data). An AI model may be implemented using one or more neural networks (e.g., including deep neural networks (DNN), recurrent neural networks (RNN), convolutional neural networks (CNN), and combinations thereof) and using various neural network architectures (e.g., autoencoders, generative adversarial networks, etc.). Various techniques may be used to train the AI model, in order to update and optimize its parameters. For example, backpropagation is a common technique for training a DNN, in which a loss function is calculated between the inference data generated by the DNN and some target output (e.g., ground-truth data). A gradient of the loss function is calculated with respect to the parameters of the DNN, and the calculated gradient is used (e.g., using a gradient descent algorithm) to update the parameters with the goal of minimizing the loss function.

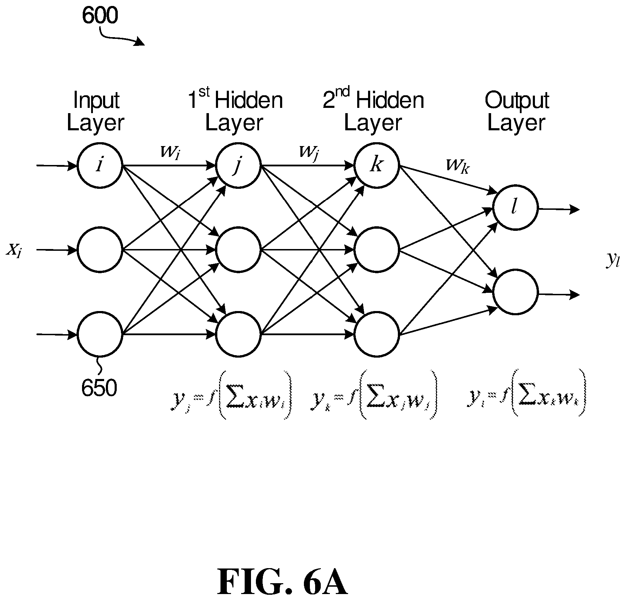

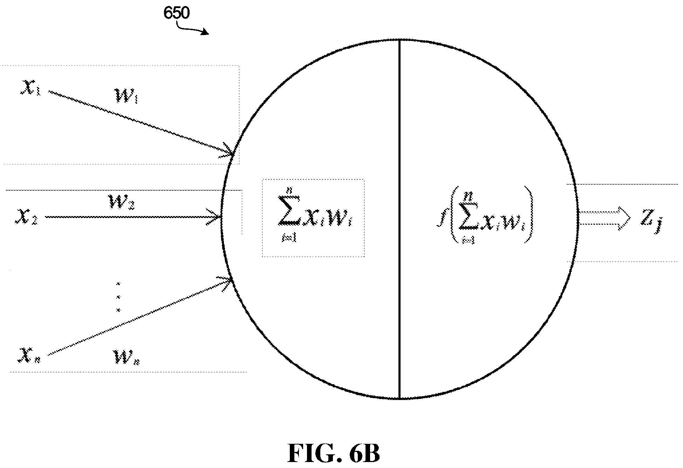

In some embodiments, an AI model encompasses neural networks, which are used in machine learning. A neural network is composed of a plurality of computational units (which may also be referred to as neurons), which are arranged in one or more layers. The process of receiving an input at an input layer and generating an output at an output layer may be referred to as forward propagation. In forward propagation, each layer receives an input (which may have any suitable data format, such as vector, matrix, or multidimensional array) and performs computations to generate an output (which may have different dimensions than the input). The computations performed by a layer typically involves applying (e.g., multiplying) the input by a set of weights (also referred to as coefficients). With the exception of the first layer of the neural network (i.e., the input layer), the input to each layer is the output of a previous layer. A neural network may include one or more layers between the first layer (i.e., input layer) and the last layer (i.e., output layer), which may be referred to as inner layers or hidden layers. For example, FIG. 6A depicts an example of a neural network 600 that includes an input layer, an output layer and two hidden layers. In this example, it can be seen that the output of each of the three neurons in the input layer of the neural network 600 is included in the input vector to each of the three neurons in the first hidden layer. Similarly, the output of each of the three neurons of the first hidden layer is included in an input vector to each of the three neurons in the second hidden layer and the output of each of the three neurons of the second hidden layer is included in an input vector to each of the two neurons in the output layer. As noted above, the fundamental computation unit in a neural network is the neuron, as shown at 650 in FIG. 6A. FIG. 6B illustrates an example of a neuron 650 that may be used as a building block for the neural network 600. As shown in FIG. 6B, in this example the neuron 650 takes a vector x as an input and performs a dot-product with an associated vector of weights w. The final output z of the neuron is the result of an activation function *f*() on the dot product. Various neural networks may be designed with various architectures (e.g., various numbers of layers, with various functions being performed by each layer).

A neural network is trained to optimize the parameters (e.g., weights) of the neural network. This optimization is performed in an automated manner and may be referred to as machine learning. Training of a neural network involves forward propagating an input data sample to generate an output value (also referred to as a predicted output value or inferred output value), and comparing the generated output value with a known or desired target value (e.g., a ground-truth value). A loss function is defined to quantitatively represent the difference between the generated output value and the target value, and the goal of training the neural network is to minimize the loss function. Backpropagation is an algorithm for training a neural network. Backpropagation is used to adjust (also referred to as update) a value of a parameter (e.g., a weight) in the neural network, so that the computed loss function becomes smaller. Backpropagation involves computing a gradient of the loss function with respect to the parameters to be optimized, and a gradient algorithm (e.g., gradient descent) is used to update the parameters to reduce the loss function. Backpropagation is performed iteratively, so that the loss function is converged or minimized over a number of iterations. After a training condition is satisfied (e.g., the loss function has converged, or a predefined number of training iterations have been performed), the neural network is considered to be trained. The trained neural network may be deployed (or executed) to generate inferred output data from input data. In some embodiments, training of a neural network may be ongoing even after a neural network has been deployed, such that the parameters of the neural network may be repeatedly updated with up-to-date training data.

Referring again to FIG. 5, in some embodiments the UE 402 and network device 452 may exchange information for the purposes of training. The information exchanged between the UE 402 and the network device 452 is implementation specific, and it might not have a meaning understandable to a human (e.g. it might be intermediary data produced during execution of a ML algorithm). It might also or instead be that the information exchanged is not predefined by a standard, e.g. bits may be exchanged, but the bits might not be associated with a predefined meaning. In some embodiments, the network device 452 may provide or indicate, to the UE 402, one or more parameters to be used in the ML module 410 implemented at the UE 402. As one example, the network device 452 may send or indicate updated neural network weights to be implemented in a neural network executed by the ML module 410 on the UE-side, in order to try to optimize one or more aspects of modulation and/or coding used for communication between the UE 402 and a T-TRP or NT-TRP.

In some embodiments, the UE 402 may implement AI itself, e.g. perform learning, whereas in other embodiments the UE 402 may not perform learning itself but may be able to operate in conjunction with an AI implementation on the network side, e.g. by receiving configurations from the network for an AI model (such as a neural network or other ML algorithm) implemented by the ML module 410, and/or by assisting other devices (such as a network device or other AI capable UE) to train an AI model (such as a neural network or other ML algorithm) by providing requested measurement results or observations. For example, in some embodiments, UE 402 itself may not implement learning or training, but the UE 402 may receive trained configuration information for an ML model determined by the network device 452 and execute the model.

Although the example in FIG. 5 assumes AI/ML capability on the network side, it might be the case that the network does not itself perform training/learning, and instead a UE may perform learning/training itself, possibly with dedicated training signals sent from the network. In other embodiments, end-to-end (E2E) learning may be implemented by the UE and the network device 452.

Using AI, e.g. by implementing an AI model as described above, various processes, such as link adaptation, may be AI-enabled. Some examples of possible AI/ML training processes and over the air information exchange procedures between devices during training phases to facilitate AI-enabled processes in accordance with embodiments of the present disclosure are described below.

Referring again to FIG. 5, for wireless federated learning (FL), the network device 452 may initialize a global AI/ML model implemented by the ML module 500, sample a group of UEs, such as the four UEs 402, 404, 406 and 408 shown in FIG. 5, and broadcast the global AI/ML model parameters to the UEs. Each of the UEs 402, 404, 406 and 408 may then initialize its local AI/ML model using the global AI/ML model parameters, and update (train) its local AI/ML model using its own data. Then each of the UEs 402, 404, 406 and 408 may report its updated local AI/ML model's parameters to the network device 452. The network device 452 may then aggregate the updated parameters reported from UEs 402, 404, 406 and 408 and update the global AI/ML model. The aforementioned procedure is one iteration of FL-based AI/ML model training procedure. The network device 452 and the UEs 402, 404, 406 and 408 perform multiple iterations until the AI/ML model has converged sufficiently to satisfy one or more training goals/criteria and the AI/ML model is finalized.

There are two types of conventional FL processes: synchronous FL and asynchronous FL.

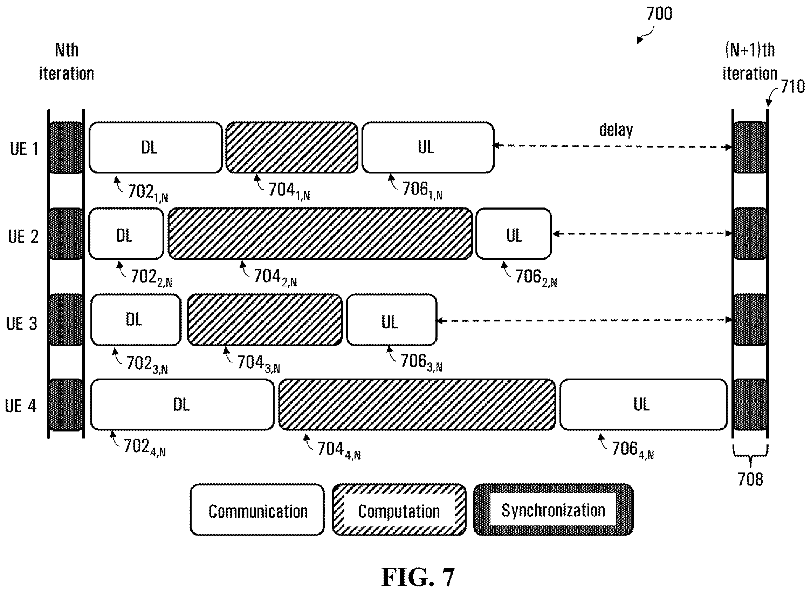

In conventional synchronous FL, which is an iterative training process, for each training iteration, a network device, such as a BS, updates a global model (e.g. aggregation and average) after receiving updates from all UEs participating in the synchronous FL training process. For example, FIG. 7 illustrates a timeline of actions 700 performed by four UEs (UE 1, UE 2, UE 3 and UE 4) for one iteration of a synchronous FL training process. In particular, FIG. 7 shows the actions performed by the four UE for the Nth iteration, where N≥1. In FIG. 7, the communication delays between the BS and each of the four UEs for the Nth iteration, including transmission delay, retransmission delay, signal processing delay, etc. are indicated at 702_{1,N}, 702_{2,N}, 702_{3,N} and 702_{4,N} for the DL communication between the BS and each UE and at 706_{1,N}, 706_{2,N}, 706_{3,N} and 706_{4,N} for the UL communication between each UE and the BS. Furthermore, the AI/ML processing delay at each of the four UEs including, for example, the delay for determining the local AI/ML model update for the Nth iteration, is indicated at 704_{1,N}, 704_{2,N}, 704_{3,N} and 704_{4,N} for each of the four UEs, respectively. In addition, the AI/ML processing delay at the BS side including, for example, the delay for global model update according to the received local AI/ML model update parameters from the UEs, is indicated at 708.

However, one significant problem with conventional synchronous FL training processes is the large training delay that can be caused by lagging UEs, e.g. UEs experiencing low channel quality and/or poor computation capability. This is because the BS does not start the next iteration for training, e.g., the (N+1)th iteration indicated at 710 in FIG. 7, until all UEs have successfully decoded the DL transmission, updated their local model, and reported the local model parameters to the BS. That is the training delay is dominated by the worst UE having the largest delay of communication and computation, resulting in a large delay for the AI model training. An example of this is shown in FIG. 7, in which UE 4 has significantly longer DL and UL communication delays, as indicated at 702_{4,N} and 706_{4,N}, and a significantly longer computation delay, as indicated at 704_{4,N}, which causes the (N+1)th iteration to be delayed relative to the times at which UE 1, UE2 and UE 3 have successfully reported their local model parameters to the BS.

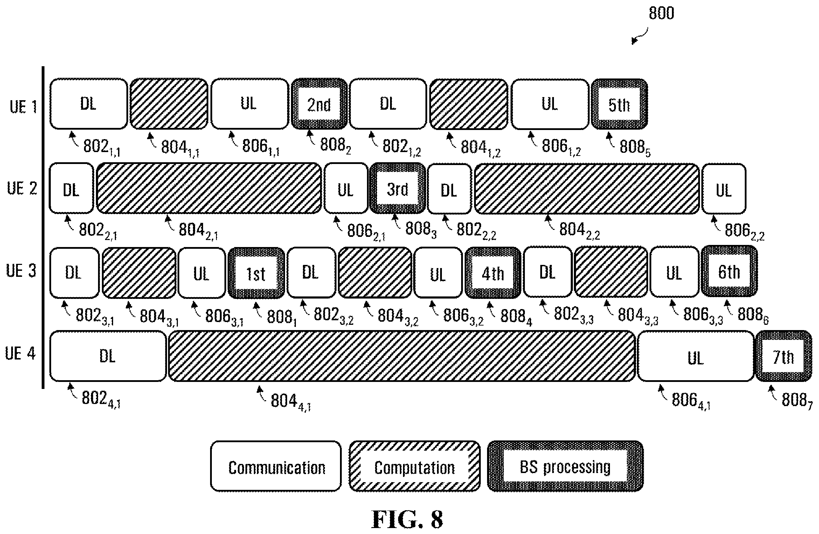

In asynchronous FL, the BS immediately updates the global AI/ML model whenever it receives an update from a UE. For example, FIG. 8 illustrates a timeline of actions 800 performed by four UEs (UE 1, UE 2, UE 3 and UE 4) over multiple iterations of an asynchronous FL training process. In FIG. 8, the communication delays between the BS and each of the four UEs for the initial DL transmission of the global AI/ML model are indicated at 802_{1,1}, 802_{2,1}, 802_{3,1} and 802_{4,1}, the computation delays for the first update of their local models are indicated at 804_{1,1}, 804_{2,1}, 804_{3,1} and 804_{4,1}, and the communication delays between each of the UEs and the BS for the initial UL transmissions for reporting their initial local AI/ML model parameters updates are indicated at 806_{1,1}, 806_{2,1}, 806_{3,1} and 806_{4,1}, respectively.

In this example, UE 3 has the shortest combined communication and computation delays, which means that the BS first updates the global AI/ML model after receiving the local AI/ML model parameters update from UE 3, as indicated at 808₁ in FIG. 8, after which the BS initiates a second iteration with UE 3.

UE 1 has the second shortest combined communication and computation delays, which means that the BS next updates the global AI/ML model, as indicated at 808₂, after receiving the first local AI/ML model parameters update from UE 1, after which the BS initiates a second iteration with UE 1.

UE 2 has the second shortest combined communication and computation delays, which means that the BS next updates the global AI/ML model, as indicated at 808₃, after receiving the first local AI/ML model parameters update from UE 2, after which the BS initiates a second iteration with UE 2.

The BS updates the global AI/ML model for a fourth time, as indicated at 808₄, once it receives the updated local AI/ML parameters from UE 3 following the communication and computation delays indicated at 802_{3,2}, 804_{3,2} and 806_{3,2} for the second iteration for UE 3, after which the BS initiates a third iteration with UE 3.

The BS updates the global AI/ML model for a fifth time, as indicated at 808₅, once it receives the updated local AI/ML parameters from UE 1 following the communication and computation delays indicated at 802_{1,2}, 804_{1,2} and 806_{1,2} for the second iteration for UE 1. After updating the global AI/ML model for the fifth time, as indicated at 808₅, the BS may initiate a third iteration with UE 1 (not shown).

The BS updates the global AI/ML model for a sixth time, as indicated at 808₆, once it receives the updated local AI/ML parameters from UE 3 following the communication and computation delays indicated at 802_{3,3}, 804_{3,3} and 806_{3,3} for the third iteration for UE 3. After updating the global AI/ML model for the sixth time, as indicated at 808₆, the BS may initiate a fourth iteration with UE 3 (not shown).

UE 4 has the longest combined communication and computation delays, which in this example are so long that the BS does not receive the initial local AI/ML model parameters update from UE4 until after it completes its sixth update of the global AI/ML model. As such, the BS next updates the global AI/ML model for a seventh time, as indicated at 808₇, once it receives the updated local AI/ML parameters from UE 4 following the communication and computation delays indicated at 802_{4,1}, 804_{4,1} and 806_{4,1} for the first iteration for UE 4.

Asynchronous FL training processes generally have lower training latency relative to synchronous FL training processes because the waiting delay that commonly plagues synchronous FL is avoided. However, there are two main drawbacks to conventional asynchronous FL training processes. The first drawback is the large communication overhead due to asynchronous DL transmissions. The second drawback is that a local AI/ML model parameter update from a lagging UE may be out of date, which can have a negative impact on the accuracy of the global AI/ML model if the out of date update from the lagging UE is utilized by the BS to update the global AI/ML model. For example, as shown in FIG. 8, the BS does not receive the first local AI/ML model update from UE4 until after it has already received and incorporated multiple updates from the other UEs. As such, updating the global AI/ML model based on the local AI/ML model parameters provided by UE 4 could have a detrimental effect on the accuracy of the global AI/ML model.

From the foregoing, it can be seen that both synchronous FL and asynchronous FL have their own drawbacks.

Other than FL, large communication overhead and large learning delay also exists in other learning methods. For example, in distributed learning, UEs and a network device collaboratively train AI models in a manner similar to FL. The primary difference between FL and distributed learning being that in FL the DL transmissions are done via broadcast or groupcast transmissions, whereas unicast transmissions are used for DL in distributed learning.

Another drawback of existing AI/ML model training procedure is related to the payload size of exchanged data, which is typically very large. For example, in many cases the exchanged data includes hundreds or thousands of AI/ML model parameters, e.g. gradients, connection weights, biases, etc. Therefore, due to the often unreliable nature of transmissions in wireless communication and the typically large data volume for the exchanged data between devices for AI training, the air interface resource overhead required for AI/ML model training can be very large. Accordingly, techniques to reduce the overhead and delays associated with online AI/ML model training are highly desirable.

The present disclosure describes examples of AI/ML model training procedures that avoid or at least mitigate one or more of the foregoing problems with conventional AI/ML model training procedures. For example, as discussed in further detail below, in some embodiments described herein different techniques are used to configure UEs to selectively participate in iterations AI/ML model training procedure. For example, a first aspect of the present disclosure provides a quasi-synchronous federated learning process in which a group of UEs is configured to participate for a given iteration. Such embodiments are based on a new feedback signaling mechanism by which UEs report their current processing delay and/or training data volume to a BS, which in turn uses that information to determine the group of UEs to participate in a given iteration of the AI/ML model training process. A second aspect of the present disclosure provides an asynchronous number of training iterations for different UEs during an AI/ML model training process. In such embodiments, the AI/ML model training process supports the dynamic joining, suspending or dropping of individual UEs from the training process for one or more iterations. Furthermore, in some embodiments, a UE that dynamically joins the training process may be configured to train only a partial model (a subset of parameters) to reduce overhead.

It should be noted that although many of the following examples are described in the context of federated learning-based or distributed learning-based AI/ML model training procedures, the techniques described herein can also be applied to AI training in other learning methods, e.g. centralized learning, auto-encoder, DNN (Deep Neural Network), CNN (convolutional neural network), etc.

### Quasi-synchronous Federated Learning

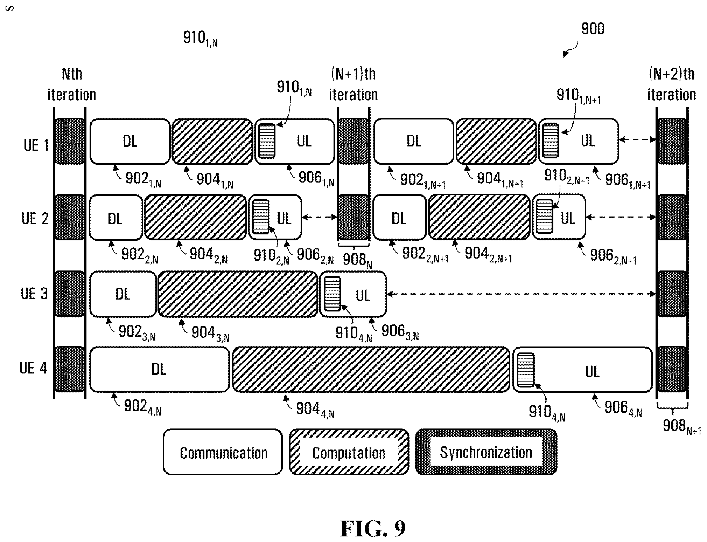

As noted above, one aspect of the present disclosure provides a quasi-synchronous FL process for AI/ML model training in which, based on semi-static and/or dynamic feedback from UEs, a BS can statically and/or dynamically determine a group of participating UEs for each learning iteration. For example, FIG. 9 illustrates a timeline of actions 900 performed by four UEs (UE 1, UE 2, UE 3 and UE 4) over multiple iterations of a quasi-synchronous federated learning procedure, according to one embodiment. In particular, FIG. 9 shows the actions performed by the four UE for an Nth and (N+1)th iterations, where N≥1. The semi-static and/or dynamic feedback from the UEs could include at least one of: a current processing capability of the UE; a current volume of training data available for the iterative AI/ML model training process at the UE; or a sensing capacity of the UE to collect training data for the iterative AI/ML model training process.

In FIG. 9, the communication delays between the BS and each of the four UEs for the Nth iteration, including transmission delay, retransmission delay, signal processing delay, etc. are indicated at 902_{1,N}, 902_{2,N}, 902_{3,N} and 902_{4,N} for the DL communication between the BS and each UE and at 906_{1,N}, 906_{2,N}, 906_{3,N} and 906_{4,N} for the UL communication between each UE and the BS. Furthermore, the AI/ML processing delay at each of the four UEs including, for example, the delay for determining the local AI/ML model update for the Nth iteration, is indicated at 904_{1,N}, 904_{2,N}, 904_{3,N} and 904_{4,N} for each of the four UEs, respectively. In addition, the AI/ML processing delay at the BS side for the Nth iteration including, for example, the delay for global model update according to the received local AI/ML model update parameters from the UEs, is indicated at 908_{N}.

For illustrative purposes, in this example UE 1 and UE 2 have high processing capabilities and have low communication and AI/ML processing delays and large training data volumes. In contrast, UE 3 has low communication and AI/ML processing delays but has only a small volume of training, and UE 4 has high communication and processing delays.

For those UEs having low communication and AI/ML processing delays and large data volume (UE 1 and UE 2 in the example shown in FIG. 9), the BS indicates/configures (e.g., through control signaling) those UEs to implement a greater number of learning iterations relative to the other UEs in order to achieve fast training convergence. For example, as shown in FIG. 9, the BS updates the global AI/ML model after receiving the first local AI/ML model parameters updates from UE1 and UE 2, as indicated at 908_{N} in FIG. 9, after which the BS initiates a second iteration with UE 1 and UE 2. The communication delays between the BS and UE1 and UE 2 for the (N+1)th iteration are indicated at 902_{1,N+1} and 902_{2,N+1} for the DL communication between the BS and the UEs and at 906_{1,N+1} and 906_{2,N+1} for the UL communication between the UEs and the BS. Furthermore, the AI/ML processing delays at UE 1 and UE for the (N+1)th iteration are indicated at 904_{1,N+1} and 904_{2,N}, respectively.

For those UEs having high communication and AI/ML processing delays (UE 4 in the example shown in FIG. 9), the BS indicates those UEs to implement a lesser number of learning iterations to reduce the waiting delay caused by those lagging UE(s). Similarly, for those UEs having small data volume (UE 3 in the example shown in FIG. 9), the BS could indicate such UEs to implement a lesser number of learning iterations to reduce the communication overhead of UL reports for local AI/ML model parameter updates from such UEs, because the contribution to the global AI/ML model based on such updates may be marginal due to the small volume of training data upon which the updates are based. For example, as shown in FIG. 9, the BS updates the global AI/ML model after receiving the second local AI/ML model parameter updates from UE1 and UE 2 and the first local AI/ML model parameter updates from UE 3 and UE 4, as indicated at 908_{N+1} in FIG. 9, such that UE 1 and UE 2 participate in two learning iterations within the time that UE 3 and UE 4 participate in only one learning iteration. After updating the global AI/ML model based on the updates from UE 1 and UE 2 for the (N+1)th iteration and the updates from UE 3 and UE 4 for the Nth iteration, the BS may initiate an (N+2)th iteration with UE 1, UE2, UE3 and UE4.

Quasi-synchronous FL, such as the example shown in FIG. 9, has several potential benefits over conventional synchronous and asynchronous FL. For example, relative to synchronous FL, quasi-synchronous FL as disclosed herein can potentially reduce the training latency that results from lagging UEs in synchronous FL, achieving fast training convergence. For example, as shown in FIG. 9, rather than having to wait for the communication and computation delays of the lagging UE 4 before updating the global AI/ML model, the BS can update the global AI/ML model based on the updates received from UE 1 and UE 2 for the Nth iteration and then update the global AI/ML model again based on the updates from UE 1 and UE 2 for the (N+1)th iteration and the updates from UE 3 and UE 4 for the Nth iteration. In addition, relative to asynchronous FL, quasi-synchronous FL as disclosed herein can potentially reducing the communication overhead associated with the DL transmission of the global AI/ML model indication in asynchronous FL.

To assist the BS in determining the participating UE group for a given iteration, each UE sends some assistance information to the BS. For example, as described above, the assistance information could include information indicating the amount of training data available at the UE and/or the AI/ML processing capability of the UE. The amount of training data available at different UEs is often imbalanced, and different UEs often have different AI/ML processing capabilities. Furthermore, for a specific UE, training data volume generally changes over time and the AI/ML processing capability of the UE can vary dynamically.

For example, after a UE performs sensing, there may be a large amount of training data available for AI/ML model training. However, if the UE only periodically measures some basic channel info at relatively long intervals, there may only be a small amount of training data available at the UE.

Similarly, the AI/ML processing capability of the UE can vary depending on the processing resources being utilized by other tasks/services and/or depending on the power saving state of the UE. For example, the AI/ML processing capability of the UE may be lower when the UE is in a power saving mode and/or when the UE is processing other computing task, e.g. sensing processing.

Therefore, in some embodiments, after a UE has initially accessed a BS, the UE may report its AI/ML model training capability and its training data acquiring capability to the BS. For example, the data acquiring capability could include sensing capability and/or data buffer capability for training data. In addition, the UE may send its current learning capability to the BS semi-statically or dynamically. The learning capability may be based on and/or include the current AI/ML processing capability or current training data volume of the UE, or a combination of the current AI/ML processing capability and training data volume of the UE. Based on the AI/ML model training capability feedback provided by each UE, the BS may then semi-statically or dynamically determine the participating UE groups for one training iteration.

In some embodiments, a UE may report its AI/ML model training capability semi-statically, e.g., in response to an event trigger such as a change of UE learning capability, including AI/ML processing delay and/or training data volume and/or communication channel quality. For example, when a UE enters a power saving mode, it may have less power available for AI learning, and therefore may report a higher processing delay, i.e. lower AI/ML processing capability. As another example, when a UE has collected large amount of training data, e.g. by sensing recently, the UE may report a larger training data volume.

In some embodiments, a UE may also or instead provide AI/ML model training capability feedback dynamically for each DL reception during an iterative AI/ML model training process. For example, in some embodiments, a UE could use a PUCCH resource indicated in the DCI scheduling the DL transmission for the dynamic learning capability feedback or the UE could use a specific PUCCH resource configured by the BS by RRC/MAC-CE or other DCI for the feedback. As discussed earlier, the contents of such dynamic feedback could include the current AI/ML processing delay (e.g., the processing delay for the local model update for this iteration) and/or the current training data volume for this iteration (e.g., the amount of remaining training data available at the UE or the amount of training data that the UE expects to be able to obtain).

In some embodiments, the learning capability may be conveyed as an AI/ML model training capability type selected from among a predefined or configured hierarchy of AI/ML model training capability types. For example, Table 1 includes an example of a hierarchy of AI/ML model training capability types that includes four levels (i.e., Level 1 to Level 4) in which the AI/ML model training capability is increasing or decreasing.

**Table 1 learning capability**

| **Level ID** | **Current learning capability** (combination of AI/ML processing capability and training data volume) |
|---|---|
| **0** | **Level 1** |
| **1** | **Level 2** |
| **2** | **Level 3** |
| **3** | **Level 4** |

In Table 1, each AI/ML model training capability level is associated with a corresponding Level ID. A UE having a given current AI/ML model training capability corresponding to one of the predefined or configured levels/types may indicate the corresponding Level ID to the BS in order to advise the BS of the UE's current AI/ML model training capability.

Referring again to FIG. 9, it can be seen that in quasi-synchronous FL, for a given training iteration, only some UEs may be participating, e.g. in FIG.9, only UE1 and UE2 are participating in the (N+1)th iteration. Three examples of mechanisms for achieving this selective participation in a given iteration are described below. It is noted that these examples are non-limiting and are provided for illustrative purposes only.

For example, as a first option, a BS may configure a group of UEs to participate in a given iteration by individually configuring each UE with a rule enabling the UE to determine whether or not it is to participate in a given iteration. For example, in such embodiments, for each DL transmission for indicating the updated global AI/ML model parameters, a BS could indicate the value of an iteration ID that is incremented by one at the next iteration. The BS also configures each UE with a rule indicating which iteration IDs a UE should ignore or respond to. For example, referring again to FIG. 9, UE 1 and UE 2 could be configured with a rule indicating that all iterations IDs should not be ignored, whereas UE 3 and UE 4 could be configured with a rule indicating that iterations having even numbered iteration IDs (e.g., the (N+1)th iteration, assuming N is an odd number) should be ignored.

As another option, a BS may also or instead indicate the type(s) of UEs to participate in an iteration by DCI (e.g. DCI scheduling the DL transmission for the model update or other dedicated DCI that is not the scheduling DCI used to schedule the DL transmission for the model update) or RRC or MAC-CE. For example, as shown in Table 1 above, a UE may report its own learning capability by sending the corresponding training level ID to the BS. For a given iteration, the BS could indicate all UEs or UEs with the learning capability larger than a threshold (e.g. Level 2) to participate in the iteration. For example., referring again to FIG. 9, UE 1 and UE 2 may report Level ID 3 to the BS (indicating UE 1 and UE 2 currently have Level 4 AI/ML model training capabilities, e.g., high AI/ML model training capability and a large amount of training data), whereas UE 3 may report Level ID 1 (indicating UE 3 currently has Level 2 AI/ML model training capabilities, e.g., high AI/ML model training capability but a small amount of training data) and UE 4 may report Level ID 0 (indicating UE 4 currently has Level 1 AI/ML model training capabilities, e.g., low AI/ML model training capability and low amount of training data). In this scenario, for the (N+1)th iteration, the BS could indicate all UEs with the learning capability larger than Level 2 (i.e., only UE 1 and UE 2 in this example scenario) to participate in the (N+1)th iteration.

As a third option, a BS may also or instead configure UEs with UE-specific monitoring occasion for the DCI that schedules the DL transmission of the global AI/ML model update for each iteration. For example, in order to schedule the DL transmission of the global AI/ML model update during the training process, a cyclic redundancy check (CRC) of the DCI used to schedule the DL transmission may be scrambled with a new radio network temporary identifier (RNTI), e.g., new-RNTI, that is different from a Cell RNTI (C-RNTI). For example, new-RNTI may be an RNTI used specifically for AI/ML training related communications in the wireless communication network. The monitoring occasion (e.g. monitoring symbols and monitoring periodicity) of the DCI may be configured on a UE-specific basis. For example, referring again to FIG. 9, UE 1 and UE 2 may each be configured with a shorter DCI monitoring periodicity for the DCI that schedules the DL transmissions of the global AI/ML model update, whereas UE 3 and UE 4 may each be configured with a longer DCI monitoring periodicity. For example, after all four UEs monitor for the DCI scheduling the DL transmission for the Nth iteration, only UE 1 and UE 2 monitor for the DCI scheduling the DL transmission for the (N+1)th iteration. All four UEs may again monitor for the DCI scheduling the DL transmission for the (N+2)th iteration.

For other DL scheduling, the CRC of the DCI could be scrambled with another RNTI, e.g. C-RNTI. And the monitor occasion for this type of DCI and the DCI whose CRC is scrambled with new-RNTI could be separately configured. For example, BS could configure the same monitoring occasion for the DCI scrambled with C-RNTI for UE 1, UE 2, UE 3 and UE 4.

As discussed earlier, if a lagging UE provides an out-of-date update to the BS, e.g.., due to long communication and/or computation delays, utilizing the out of date update can be detrimental to the convergence of the global AI/ML model. To avoid or at least mitigate this possible drawback that can arise from asynchronous updates from some UEs, in some embodiments UEs are configured to include an indication of the corresponding iteration ID in the UL report when the UE reports its updated local AI/ML model parameters in order to inform BS of the iteration upon which the update is based. For example, referring again to FIG. 9, each of the UL transmissions indicated at 906_{1,N}, 906_{1,N+1}, 906_{2,N}, 906_{2,N+1}, 906_{3,N} and 906_{4,N} is shown as including information, as indicated at 910_{1,N}, 910_{1,N+1}, 910_{2,N}, 910_{2,N+1}, 910_{3,N} and 910_{4,N}, that indicates the corresponding iteration ID upon which the local AI/ML model update contained in the UL transmission is based. Therefore, based on the reported iteration ID, the BS could identify whether the local update is out of date and determine whether to discard or utilize the reported data.

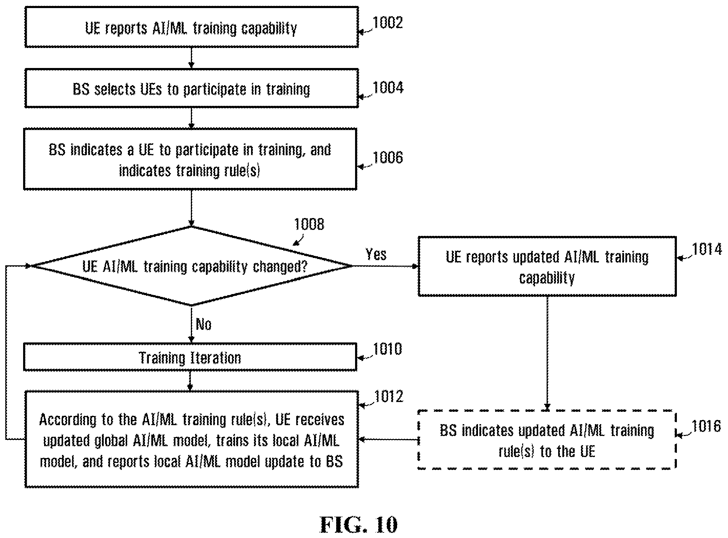

FIG. 10 illustrates an example of a flowchart for quasi-synchronous federated learning according to one embodiment.

In block 1002, the UE reports its AI/ML model training capability to the BS. As discussed earlier, the AI/ML model training capability may be based on or include the AI/ML processing capability and/or training data volume for the UE and may be conveyed by sending an AI/ML model training capability level ID as described above with reference to the hierarchy of AI/ML model training capabilities listed in Table 1.

In block 1004, the BS, based on the AI/ML model training capabilities reported by the UE, selects UEs to participate in the training process.

In block 1006, the BS indicates the UEs that are to participate in the training and indicates one or more rules to enable the UE to determine whether to participate in a given iteration of the training process. For example, as discussed above, this could involve the BS individually configuring each UE with a rule enabling the UE to determine whether or not it is to participate in a given iteration. Alternatively or instead, this could involve indicating the type(s) of UEs to participate in an iteration by DCI (e.g. DCI scheduling the DL transmission for the update model) or RRC or MAC-CE. As another option, a BS could also or instead configure UEs with UE-specific monitoring occasions for the DCI that schedules the DL transmission of the global AI/ML model update for each iteration.

In block 1008, the UE determines whether the AI/ML model training capability of the UE has changed (increased or decreased). If not, in block 1010 the UE selectively participates in a given training iteration in block 1010 in accordance with the training rule(s) configured in block 1006. If the training rule(s) indicate that the UE is to participate in the current training iteration, then in block 1012 the UE receives updated global AI/ML model parameters from the BS for the current training iteration, trains its local AI/ML model based on the updated global AI/ML model parameters from the BS, and reports local AI/ML model update parameters to the BS, after which the UE returns to block 1008.

If the UE instead determines in block 1008 that its AI/ML model training capability has changed, then in block 1014 the UE reports its updated AI/ML model training capability to the BS, in response to which the BS may indicate updated AI/ML model training rule(s) to the UE, as optionally indicated in block 1016, and the method proceeds to block 1012 in which the selectively participates in the training process in accordance with the updated training rule(s).

As discussed earlier, quasi-synchronous FL training processes, such as the example represented by the flowchart shown in FIG. 10, have several potential benefits over conventional synchronous and asynchronous FL, such as reduced iteration-to-iteration training latency, thereby potentially achieving faster training convergence, and/or potentially reducing the communication overhead associated with the DL transmission of global AI/ML model parameters and/or the UL transmission of local AI/ML model parameters.

### Asynchronous numbers of learning for different UEs

A second aspect of the present disclosure provides mechanisms to have an asynchronous number of training iterations for different UEs during an AI/ML model training process. In such embodiments, the AI/ML model training process supports the dynamic joining, suspending or dropping of individual UEs from the training process for one or more iterations. In this aspect of the present disclosure, even for synchronous FL, the number of learning for different UEs could be different. In particular, this aspect of the present disclosure enables a UE to be dynamically suspended/dropped from learning and to dynamically join learning based, for example, on the dynamic reporting of the UE's AI/ML model training capability. For example, a UE with low AI/ML or learning capability, the UE could join the training process at a late stage of learning to reduce the training latency at the beginning of the training process. Furthermore, in some embodiments, a UE that dynamically joins the training process may be configured to train only a partial model (a subset of parameters) to reduce overhead. On the other hand, for a UE with high AI/ML model training capability, the UE can dynamically suspend or join the training process based on the availability of training data in order to reduce communication and computing overhead.

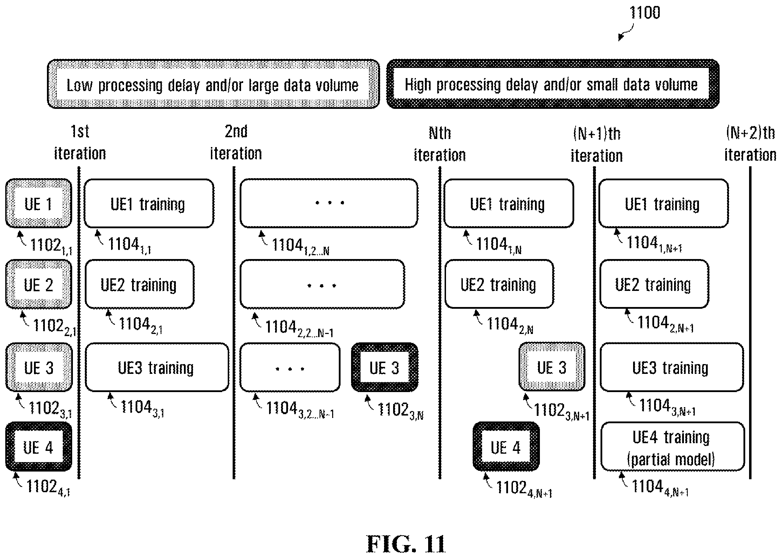

FIG. 11 illustrates a timeline of actions 1100 performed by four UEs (UE 1, UE 2, UE 3 and UE 4) over multiple iterations of an asynchronous federated learning procedure, according to one embodiment. In particular, FIG. 11 shows the actions performed by the four UE for the 1st, 2nd, Nth, (N+1)th and (N+2)th iterations, where N≥3 of an asynchronous federated learning procedure. The semi-static and/or dynamic feedback from the UEs could include at least one of: a current processing capability of the UE; a current volume of training data available for the iterative AI/ML model training process at the UE; or a sensing capacity of the UE to collect training data for the iterative AI/ML model training process.

In FIG. 11, in advance of the 1st iteration, UE 1, UE 2, UE 3 and UE 4 report their current AI/ML model training capabilities to the BS, as indicated at 1102_{1,1}, 1102_{2,1}, 1102_{3,1} and 1102_{4,1}, respectively. As discussed previously, the AI/ML model training capabilities reported by the UEs could include at least one of: a current processing capability of the UE; a current volume of training data available for the iterative AI/ML model training process at the UE; or a sensing capacity of the UE to collect training data for the iterative AI/ML model training process.

For illustrative purposes, in this example the AI/ML model training capabilities reported by UE 1, UE 2 and UE 3 at 1102_{1,1}, 1102_{2,1} and 1102_{3,1} indicate that UE 1, UE 2 and UE 3 have high processing capabilities and large training data volumes. In contrast, the AI/ML model training capability reported by UE 4 at 1102_{4,1} indicates that UE 4 has a low processing capability (high processing delay) and/or a small training data volume.

For those UEs having low communication and AI/ML processing delays and large data volume (UE 1, UE 2 and UE 3 in the example shown in FIG. 11), the BS indicates/configures (e.g., through control signaling) those UEs to join the training process and participate in the 1st iteration. On the other hand, for a UE having high AI/ML processing delays and/or a small training data volume (UE 4 in the example shown in FIG. 11), the BS may instead suspend/drop the UE from the training process, which in this example means that UE 4 does not participate in the 1st iteration with the other UEs.

The participation of UE 1, UE 2 and UE 3 in the 1st iteration of the training process is indicated at 1104_{1,1}, 1104_{2,1}, and 1104_{3,1}, respectively. In this example, UE 1, UE 2 and UE 3 continue to participate in the training process in the 2nd iteration through to the (N-1)th iteration, as indicated at participation of UE 1, UE 2 and UE 3 in the 1st iteration of the training process is indicated at 1104_{1,2...N-1}, 1104_{2,2...N-1}, and 1104_{3,2...N-1}, respectively. However, in advance of the Nth iteration UE 3 reports a change in its AI/ML model training capability, as indicated at 1104_{3,N}, which indicates that UE 3 currently has a high processing delay and/or low training data volume. Alternatively, as discussed in further detail below, rather than providing the BS with its updated AI/ML model training capability, UE 3 may also or instead send the BS an explicit request to change its learning status.

In response to the feedback provided by UE 3 at 1102_{3,N}, the UE 3 is dynamically suspended/dropped from the training process for the Nth iteration. In contrast, UE 1 and UE 2 continue to participate in the Nth iteration, as indicated at 1104_{1,N} and 1104_{2,N}, respectively. When a UE suspends learning, UE generally does not perform a local AI/ML model update and does not report its local model parameters. However, in some cases a suspended UE may receive the DL global AI/ML model update and store the latest DL AI/ML model update for future learning.

In advance of the (N+1)th iteration, UE 3 reports a further change in its AI/ML model training capability, as indicated at 1104_{3,N+1}, which indicates that UE 3 currently has a low processing delay and/or a high training data volume. For example, UE 3 may have collected enough training data to satisfy a minimum threshold for participation in the training process and/or may have exited a power saving mode. Alternatively, as discussed in further detail below, rather than providing the BS with its updated AI/ML model training capability, UE 3 may also or instead send the BS an explicit request to change its learning status in order to re-join the training process. For example, as shown in FIG. 11, although the AI/ML model training capability of UE 4 has not changed (i.e., UE 4 still has a high processing delay and/or a small training data volume), UE 4 may nonetheless send the UE a request to dynamically join the training process for the (N+1)th iteration in response to determining that the training process is at a late stage. For example, the UEs may be configured to request to dynamically join the training process once a threshold number of training iterations have occurred (e.g., in this case the threshold number may be N). As discussed previously, the BS may inform the UEs of the current iteration ID so that the UEs are aware of the current stage of training. When requesting to dynamically join the training process, a UE may inform the BS of the number of the iteration (i.e., the iteration ID) that the UE is joining, so that the BS is aware of the participating UEs for that iteration.

In response to the feedback provided by UE 3 and UE 4 at 1102_{3,N+1} and 1102_{4,N+1}, respectively, UE 3 and UE 4 dynamically join the training process with UE 1 and UE 2 for the (N+1)th iteration. The participation of UE 1, UE 2, UE 3 and UE 4 in the (N+1)th iteration is indicated at 1104_{1,N+1} 1104_{2,N+1}, 1104_{3,N+1} and 1104_{4,N+1}, respectively. As discussed earlier, a UE that dynamically joins the training process at a late stage may be configured to train only a partial model (a subset of the parameters of its local AI/ML model) to reduce overhead. For example, in FIG. 11, UE 4 only trains a partial model after dynamically joining the (N+1)th iteration of the training process. For instance, UE 4 may train fewer gradients/weights of its local AI/ML model that are not stable in the global AI/ML model at the BS.

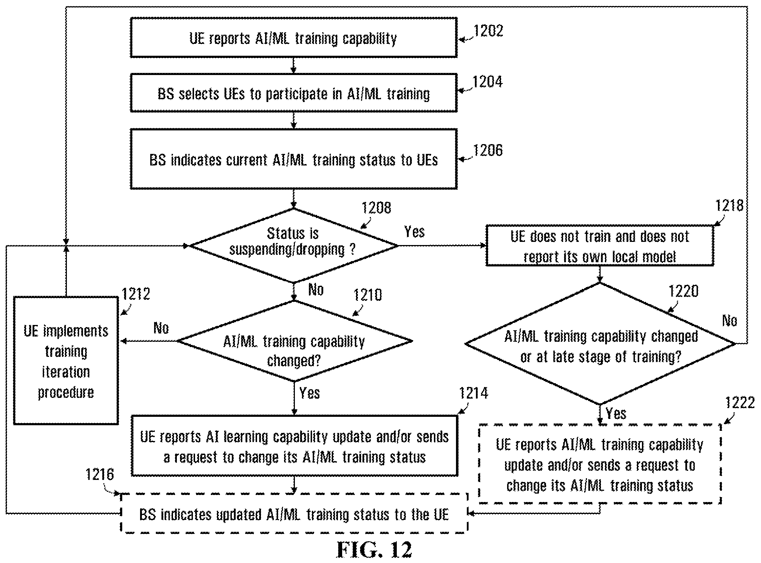

FIG. 12 illustrates an example of a flowchart for providing an asynchronous number of learning iterations for different devices, according to one embodiment.

In block 1202, the UE reports its AI/ML model training capability to the BS. As discussed earlier, the AI/ML model training capability may be based on or include the AI/ML processing capability and/or training data volume for the UE and may be conveyed by sending an AI/ML model training capability level ID as described above with reference to the hierarchy of AI/ML model training capabilities listed in Table 1.

In block 1204, the BS, based on the AI/ML model training capabilities reported by the UE, selects UEs to participate in the training process.

In block 1206, the BS indicates the current AI/ML model training status (e.g., joining or suspending/dropping) to each UE that is to participate in the training.

In block 1208, the UE determines whether its current AI/ML training status is suspending/dropping, which indicates that the UE should not participate in the current iteration of the training process. If the UE's current AI/ML training status is not suspending/dropping, then the method proceeds to block 1210 in which the UE checks whether its AI/ML training capability has changed. If the UE's AI/ML training capability has not changed, then in block 1212 the UE implements the training procedure for the current iteration of the training process, e.g., receiving the DL transmission of the updated global AI/ML model, training its local AI/ML model, and reporting local AI/ML model update to BS, after which the method returns to block 1208 to check whether the current AI/ML training status is suspending/dropping.

If the UE determines in block 1210 that its AI/ML training capability has changed, then in block 1214 the UE reports its changed AI/ML model training capability to the BS and/or send the BS a request to change its AI/ML training status. In block 1216, based on the feedback provided by the UE in block 1214, the BS indicates an updated AI/ML training status to the UE and the method returns from block 1216 to block 1208 to check whether the current AI/ML training status is suspending/dropping.

If the UE determines in block 1208 that it's current learning status is suspending/dropping, the method proceeds to block 1218, in which the UE does not update its local AI/ML model and does not report its own local AI/ML model update to the BS, and the UE then checks in block 1220 whether its AI/ML model training capability has changed or if the training process is at a late stage. If not, the method returns from block 1220 to block 1208. On the other hand, if the UE determines in block 1220 that its AI/ML model training capability has changed and/or that the training process is at a late stage, then in some embodiments in block 1222 the UE may optionally report its changed AI/ML model training capability to the BS and/or send the BS a request to change its AI/ML training status. In this scenario, in block 1216 the BS optionally indicates an updated AI/ML training status to the UE based on the feedback provided by the UE in block 1222 and the method returns from block 1216 to block 1208 to check whether the current AI/ML training status is suspending/dropping.

As discussed earlier, enabling the dynamic joining and/or suspending/dropping of training such that different UEs may asynchronously participate in a different number of learning iterations may have several potential benefits, such as reducing UL communication overhead for some UEs, and reducing training latency in FL.

### Compressed feedback parameters

In conventional FL, distributed learning and other learning processes, the communication overhead utilized for the UE's model parameter reporting can be extremely high due to the large number of parameters (e.g. gradients, weights, biases) that are typically reported, e.g., due to the use of large neural networks that include a large number of neuron nodes and connections among neuron nodes. However, most exchanged parameters are redundant.

As such, a UE can potentially save communication overhead by compressing the reported AI/ML parameters, e.g. only report some important parameters, without having a detrimental effect on the training process. Another aspect of the present disclosure provides mechanisms for indicating which parameters need to be reported and their values.

For example, referring again to FIG. 6A, which shows an example of a general AI/ML model, for a parameter report (e.g. gradients, weights, biases), a UE may send an indication signaling to inform a BS of the reported parameters for the AI/ML model. For a type of parameter, e.g. weight, UE may arrange the parameters in a predefined order or an order configured by the BS, e.g. from w1, w2, ..., wn. The UE may then determine which parameters are reported and sends assignment information to the BS for those parameters. Four examples of mechanisms for determining which parameters are reported and sending assignment information to the BS are described below. It is noted that these examples are non-limiting and are provided for illustrative purposes only.

Parameter Group (PG) based: As a first option, the assignment information could include a bitmap indicating the PGs that are reported where a PG is a set of consecutive parameters. The size of a PG may be configured by BS or predefined. For example, the PG may be reported to the BS if the corresponding bit value in the bitmap is 1, whereas the PG is not reported otherwise, or vice versa.

Continuous parameters report: In this option, the assignment information indicates a set of contiguously reported parameters, and the assignment information includes the start location of the parameters and the number of reported parameters.

Multiple cluster of continuous parameters: In this option, the assignment information indicates multiple sets of contiguously reported parameters. For each set, the assignment information indicates the start location of the parameters and the number of reported parameters.

Parameters between some layers: In this option, the UE reports one or multiple sets of parameters between some layers of the AI/ML model. For example, a set between layer N and layer M, where 1≤ N and M ≤ the total number of layers of the AI/ML model.

Furthermore, a UE needs to inform the values of the reported parameters. To reduce the communication overhead, in some embodiments a UE may indicate the range of the reported values by indicating a range ID based on a predefined or configured mapping between range IDs and value ranges. In such embodiments, a parameter set is associated to one range ID, i.e. parameters within the set have the same value range, and individual exact value indication is provided for each parameter in the set. In addition, multiple sets of parameters reported in a report could be mapped to different value range, wherein a set is associated to one range ID.

A benefit of utilizing range IDs is reducing bit overhead. For example, without the use of range IDs, 3 bits are required for each parameter in order to indicate values from -2 to 2, which means that for N parameters, 3N bits are required. In contrast, by using the range IDs shown in Table 2 for a parameter set, 1 bit is for Range ID indication, and 2 bits are used for each parameter in the set, which means that for N parameters, a total 2N+1 bits are required. Therefore, for large N, the overhead reduction can be substantial.

**Table 2 mapping between ID and value range**

| **Range ID** | **Value range** | **Bit meaning** |
|---|---|---|
| **0** | **1 =< abs(gradient) < 2** | **00: -1** |
| | | **01: -1.5** |
| | | **10: 1** |
| | | **11: 1.5** |
| **1** | **2 =< abs(gradient) < 3** | **00: -2** |
| | | **01: -2.5** |
| | | **10: 2** |
| | | **11: 2.5** |

With reference to the example mapping between Range IDs and value ranges shown in Table 2, it can be seen that associating a range ID value (expressed as one or more bits) with an AI/ML model parameter set, the respective value range that is mapped to the range ID value that is associated with the AI/ML model parameter set determines the range and bit meaning of the bit-strings of the AI/ML model parameter values in the AI/ML model parameter set. For example, if a given AI/ML model parameter value is expressed as the bit-string "10" and the Range ID value is "0", then the bit-string "10" maps to the decimal value 1, whereas if the Range ID value is "1", then the same bit-string "10" maps to the decimal value 2.

As discussed above, a header in the UE's report could inform the indication method, and/or the reported parameters, and/or the range ID for a set of parameters.

In addition, it should be noted that the use of Range IDs and assignment information as detailed above in the context of UL parameters transmission are also applicable to DL parameters transmission in order to reducing the communication overhead between UE and BS for AI/ML parameter transmissions in the DL and the UL.

By performing the methods disclosed herein, the air interface resource overhead and delays associated with online AI/ML model training can be reduced while providing a tradeoff between overhead reductions and training performance.

Examples of devices (e.g. ED or UE and TRP or network device) to perform the various methods described herein are also disclosed.

For example, a first device may include a memory to store processor-executable instructions, and a processor to execute the processor-executable instructions. When the processor executes the processor-executable instructions, the processor may be caused to perform the method steps of one or more of the devices as described herein, e.g. in relation to FIGs. 9-12. For example, the processor may cause the device to communicate over an air interface in a mode of operation by implementing operations consistent with that mode of operation, e.g. performing necessary measurements and generating content from those measurements, as configured for the mode of operation, preparing uplink transmissions and processing downlink transmissions, e.g. encoding, decoding, etc., and configuring and/or instructing transmission/reception on RF chain(s) and antenna(s).

Note that the expression "at least one of A or B", as used herein, is interchangeable with the expression "A and/or B". It refers to a list in which you may select A or B or both A and B. Similarly, "at least one of A, B, or C", as used herein, is interchangeable with "A and/or B and/or C" or "A, B, and/or C". It refers to a list in which you may select: A or B or C, or both A and B, or both A and C, or both B and C, or all of A, B and C. The same principle applies for longer lists having a same format.

Moreover, any module, component, or device exemplified herein that executes instructions may include or otherwise have access to a non-transitory computer/processor readable storage medium or media for storage of information, such as computer/processor readable instructions, data structures, program modules, and/or other data. A non-exhaustive list of examples of non-transitory computer/processor readable storage media includes magnetic cassettes, magnetic tape, magnetic disk storage or other magnetic storage devices, optical disks such as compact disc read-only memory (CD-ROM), digital video discs or digital versatile disc (DVDs), Blu-ray Disc^{™}, or other optical storage, volatile and non-volatile, removable and non-removable media implemented in any method or technology, random-access memory (RAM), read-only memory (ROM), electrically erasable programmable read-only memory (EEPROM), flash memory or other memory technology. Any such non-transitory computer/processor storage media may be part of a device or accessible or connectable thereto. Any application or module herein described may be implemented using computer/processor readable/executable instructions that may be stored or otherwise held by such non-transitory computer/processor readable storage media.

### DEFINITIONS OF ACRONYMS

- LTE: Long Term Evolution
- NR: New Radio
- BWP: Bandwidth part
- BS: Base Station
- CA: Carrier Aggregation
- CC: Component Carrier
- CG: Cell Group
- CSI: Channel state information
- CSI-RS: Channel state information Reference Signal
- DC: Dual Connectivity
- DCI: Downlink control information
- DL: Downlink
- DL-SCH: Downlink shared channel
- EN-DC: E-UTRA NR dual connectivity with MCG using E-UTRA and SCG using NR
- gNB: Next generation (or 5G) base station
- HARQ-ACK: Hybrid automatic repeat request acknowledgement
- MCG: Master cell group
- MCS: Modulation and coding scheme
- MAC-CE: Medium Access Control-Control Element
- PBCH: Physical broadcast channel
- PCell: Primary cell
- PDCCH: Physical downlink control channel
- PDSCH: Physical downlink shared channel
- PRACH: Physical Random Access Channel
- PRG: Physical resource block group
- PSCell: Primary SCG Cell
- PSS: Primary synchronization signal
- PUCCH: Physical uplink control channel
- PUSCH: Physical uplink shared channel
- RACH: Random access channel
- RAPID: Random access preamble identity
- RB: Resource block
- RE: Resource element
- RRM: Radio resource management
- RMSI: Remaining system information
- RS: Reference signal
- RSRP: Reference signal received power
- RRC: Radio Resource Control
- SCG: Secondary cell group
- SFN: System frame number
- SL: Sidelink
- SCell: Secondary Cell
- SPS: Semi-persistent scheduling
- SR: Scheduling request
- SRI: SRS resource indicator
- SRS: Sounding reference signal
- SSS: Secondary synchronization signal
- SSB: Synchronization Signal Block
- SUL: Supplement Uplink
- TA: Timing advance
- TAG: Timing advance group
- TUE: Target UE
- UCI: Uplink control information
- UE: User Equipment
- UL: Uplink
- UL-SCH: Uplink shared channel

## Claims

1. A method for artificial intelligence or machine learning (AI/ML) data transmission in a wireless communication network, the method comprising:
determining an AI/ML model training capability of a first device (110a-d, 402, 404, 406, 408), the AI/ML model training capability being indicative of a capability of the first device to contributively participate in an AI/ML model training process with at least a second device (120a-c, 452) in the wireless communication network, the AI/ML model training capability being determined based on at least one of:
i) a current processing capability of the first device;
ii) a current volume of training data available for the AI/ML model training process at the first device;
iii) a sensing capacity of the first device to collect training data for the AI/ML model training process;
transmitting the AI/ML model training capability to the second device; and **characterized in that** the method further comprises:
receiving, from the second device, control signaling configuring the first device with a rule for determining, for an iteration of the AI/ML model training process, whether the first device is to participate in the iteration, wherein an iteration of the AI/ML model training process is associated with a respective value of an iteration identifier (ID) such that the respective value of the iteration ID is incremented by one for each subsequent iteration, and wherein the control signaling configures the first device to selectively participate in a given iteration based on the respective value of the iteration ID associated with the given iteration, or
receiving, from the second device, control signaling to configure the first device to monitor for first downlink control information (DCI) in accordance with a first monitoring periodicity, wherein transmission, from the second device, of data or control information for a given iteration of the AI/ML model training process is scheduled by the first DCI, and wherein a cyclic redundancy check (CRC) value of the first DCI is scrambled with a first radio network temporary identifier (RNTI).

2. The method of claim 1, wherein transmitting the AI/ML model training capability to the second device comprises:
determining the AI/ML model training capability of the first device has changed; and
transmitting the changed AI/ML model training capability to the second device after determining the AI/ML model training capability of the first device has changed.

3. The method of claim 2, wherein determining the AI/ML model training capability of the first device has changed comprises identifying a change in at least one of:
i) the current processing capability of the first device;
ii) the current volume of training data available for the AI/ML model training process at the first device;
iii) the sensing capacity of the first device to collect training data for the AI/ML model training process.

4. The method of claim 1, wherein determining the AI/ML model training capability of the first device comprises selecting an AI/ML model training capability type from among a predefined or configured hierarchy of AI/ML model training capability types.

5. The method of claim 4, wherein transmitting the AI/ML model training capability to the second device comprises transmitting an index corresponding to the AI/ML model training capability type selected from among the predefined or configured hierarchy of AI/ML model training capability types.

6. The method of any one of claims 1, 4 and 5, wherein transmitting the AI/ML model training capability to the second device is done after receiving data or control information from the second device during the AI/ML model training process.

7. A method for artificial intelligence or machine learning (AI/ML) data transmission in a wireless communication network, the method comprising:
receiving an artificial intelligence or machine learning (AI/ML) model training capability from a first device (110a-d, 402, 404, 406, 408), the AI/ML model training capability from the first device being indicative of a capability of the first device to contributively participate in an AI/ML model training process with at least a second device (120a-c, 452) in the wireless communication network;
transmitting, based on the AI/ML model training capability received from the first device, information enabling the first device to determine, for each of at least one iteration of the AI/ML model training process, whether the first device is to participate in the iteration; and **characterized in that** the method further comprises:
receiving an AI/ML model training capability from the first device, comprises receiving a respective AI/ML model training capability from each device of a plurality of devices, inclusive of the first device, transmitting, based on the AI/ML model training capability received from the first device, information enabling the first device to determine, for each of at least one iteration of the AI/ML model training process, whether the first device is to participate in the iteration comprises transmitting, based on the respective AI/ML model training capability received from each device of the plurality of devices, information enabling each device of the plurality of devices to determine, for each of at least one iteration of the AI/ML model training process, whether the device is to participate in the iteration,
wherein transmitting information enabling each device to determine, for each of at least one iteration of the AI/ML model training process, whether the device is to participate in the iteration comprises: transmitting control signaling for each device of the plurality of devices to configure each device of the plurality of devices with a device-specific rule for determining, for each iteration of the AI/ML model training process, whether the device is to participate in the iteration, wherein an iteration of the AI/ML model training process is associated with a respective value of an iteration identifier (ID) such that the respective value of the iteration ID is incremented by one for each subsequent iteration, and the device-specific rules that the plurality of devices are configured with configure each device of the plurality of devices to selectively participate in a given iteration based on the respective value of the iteration ID associated with the given iteration; or
wherein transmitting information enabling the first device to determine, for each of at least one iteration of the AI/ML model training process, whether the first device is to participate in the iteration comprises: transmitting first downlink control information (DCI) containing first scheduling information for scheduling transmission of data or control information for a given iteration of the AI/ML model training process, wherein a cyclic redundancy check (CRC) value of the first DCI is scrambled with a first radio network temporary identifier (RNTI); and transmitting control signaling to configure the first device to monitor for the first DCI in accordance with a first monitoring periodicity.

8. The method of claim 7, wherein the AI/ML model training capability comprises at least one of:
i) a current processing capability of the first device;
ii) a current volume of training data available for the iterative AI/ML model training process at the first device;
iii) a sensing capacity of the first device to collect training data for the iterative AI/ML model training process.

9. The method of claim 7 or 8, wherein the AI/ML model training capability of the first device comprises an AI/ML model training capability type selected from among a predefined or configured hierarchy of AI/ML model training capability types.

10. The method of claim 9, wherein receiving the AI/ML model training capability from the first device comprises receiving an index corresponding to the AI/ML model training capability type selected from among the predefined or configured hierarchy of AI/ML model training capability types.

11. The method of any of claims 7 to 10, further comprising:
transmitting control signaling scheduling transmission of data or control information for a given iteration of the AI/ML model training process, wherein receiving the AI/ML model training capability from the first device comprises receiving the AI/ML model training capability from the first device after the control signaling scheduling the transmission of data or control information for the given iteration is transmitted.

12. The method of claim 11, wherein:
the control signaling scheduling the transmission of data or control information for the given iteration comprises control information identifying a physical uplink control channel (PUCCH) resource to be used by the first device for the given iteration; and
receiving the AI/ML model training capability from the first device comprises receiving the AI/ML model training capability for the given iteration on the PUCCH resource.

13. An apparatus, comprising one or more units for performing the method according to any of claims 1 to 6.

14. An apparatus, comprising one or more units for performing the method according to any of claims 7 to 12.

15. A processor readable storage medium storing instructions which, when the instructions are executed by the processor, cause an apparatus to perform the method of any one of claims 1 to 12.

## Patentansprüche

1. Verfahren zur Datenübertragung mittels künstlicher Intelligenz oder maschinellem Lernen (KI/ML) in einem drahtlosen Kommunikationsnetz, wobei das Verfahren Folgendes umfasst:
Bestimmen einer KI/ML-Modelltrainingsfähigkeit einer ersten Einrichtung (110a-d, 402, 404, 406, 408), wobei die KI/ML-Modelltrainingsfähigkeit eine Fähigkeit der ersten Einrichtung zur aktiven Teilnahme an einem KI/ML-Modelltrainingsprozess mit mindestens einer zweiten Einrichtung (120a-c, 452) in dem drahtlosen Kommunikationsnetz angibt, wobei die KI/ML-Modelltrainingsfähigkeit basierend auf mindestens einem von Folgendem bestimmt wird:
i) einer aktuellen Verarbeitungsfähigkeit der ersten Einrichtung;
ii) einem aktuellen Volumen an Trainingsdaten, die für den KI/ML-Modelltrainingsprozess an der ersten Einrichtung verfügbar sind;
iii) einer Erfassungskapazität der ersten Einrichtung zum Sammeln von Trainingsdaten für den KI/ML-Modelltrainingsprozess;
Übertragen der KI/ML-Modelltrainingsfunktion an die zweite Einrichtung; und **dadurch gekennzeichnet, dass** das Verfahren ferner Folgendes umfasst:
Empfangen, von der zweiten Einrichtung, von Steuersignalisierung, die die erste Einrichtung mit einer Regel zum Bestimmen, für eine Iteration des KI/ML-Modelltrainingsprozesses, ob die erste Einrichtung an der Iteration teilzunehmen hat, konfiguriert, wobei eine Iteration des KI/ML-Modelltrainingsprozesses einem jeweiligen Wert einer Iterationskennung (ID) derart zugeordnet ist, dass der jeweilige Wert der Iterations-ID für jede nachfolgende Iteration um eins erhöht wird, und wobei die Steuersignalisierung die erste Vorrichtung dazu konfiguriert, selektiv an einer gegebenen Iteration teilzunehmen, basierend auf dem jeweiligen Wert der Iterations-ID, die der gegebenen Iteration zugeordnet ist, oder Empfangen, von der zweiten Einrichtung, von Steuersignalisierung, um die erste Einrichtung dazu zu konfigurieren, gemäß einer ersten Überwachungsperiodizität auf erste Downlink-Steuerinformationen (DCI) zu überwachen, wobei die Übertragung, von der zweiten Einrichtung, von Daten oder Steuerinformationen für eine gegebene Iteration des KI/ML-Modelltrainingsprozesses durch die ersten DCI geplant wird und wobei ein zyklischer Redundanzprüfwert (CRC-Wert) der ersten DCI mit einer ersten temporären Funknetzkennung (RNTI) verschlüsselt wird.

2. Verfahren nach Anspruch 1, wobei das Übertragen der KI/ML-Modelltrainingsfunktion an die zweite Einrichtung Folgendes umfasst:
Bestimmen, dass sich die KI/ML-Modelltrainingsfähigkeit der ersten Einrichtung geändert hat; und
Übertragen der geänderten KI/ML-Modelltrainingsfähigkeit an die zweite Einrichtung, nachdem bestimmt wurde, dass sich die KI/ML-Modelltrainingsfähigkeit der ersten Einrichtung geändert hat.

3. Verfahren nach Anspruch 2, wobei das Bestimmen, das sich die KI/ML-Modelltrainingsfähigkeit der ersten Vorrichtung geändert hat, Identifizieren einer Änderung von mindestens einem von Folgendem umfasst:
i) der aktuellen Verarbeitungsfähigkeit der ersten Einrichtung;
ii) dem aktuellen Volumen an Trainingsdaten, die für den KI/ML-Modelltrainingsprozess an der ersten Einrichtung verfügbar sind;
iii) der Erfassungskapazität der ersten Einrichtung zum Sammeln von Trainingsdaten für den KI/ML-Modelltrainingsprozess.

4. Verfahren nach Anspruch 1, wobei das Bestimmen der KI/ML-Modelltrainingsfähigkeit der ersten Einrichtung Auswählen eines KI/ML-Modelltrainingsfähigkeitstyps aus einer vordefinierten oder konfigurierten Hierarchie von KI/ML-Modelltrainingsfähigkeitstypen umfasst.

5. Verfahren nach Anspruch 4, wobei das Übertragen der KI/ML-Modelltrainingsfähigkeit an die zweite Einrichtung Übertragen eines Index, der dem aus der vordefinierten oder konfigurierten Hierarchie von KI/ML-Modelltrainingsfähigkeitstypen ausgewählten KI/ML-Modelltrainingsfähigkeitstyp entspricht, umfasst.

6. Verfahren nach einem der Ansprüche 1, 4 und 5, wobei das Übertragen der KI/ML-Modelltrainingsfähigkeit an die zweite Einrichtung nach dem Empfangen von Daten oder Steuerinformationen von der zweiten Einrichtung während dem KI/ML-Modelltrainingsprozess erfolgt.

7. Verfahren zur Datenübertragung mittels künstlicher Intelligenz oder maschinellem Lernen (KI/ML) in einem drahtlosen Kommunikationsnetz, wobei das Verfahren Folgendes umfasst:
Empfangen einer Modelltrainingsfähigkeit mittels künstlicher Intelligenz oder maschinellem Lernen (KI/ML-Modelltrainingsfähigkeit) von einer ersten Einrichtung (110a-d, 402, 404, 406, 408), wobei die KI/ML-Modelltrainingsfähigkeit von der ersten Einrichtung eine Fähigkeit der ersten Einrichtung zur aktiven Teilnahme an einem KI/ML-Modelltrainingsprozess mit mindestens einer zweiten Einrichtung (120a-c, 452) in dem drahtlosen Kommunikationsnetz angibt;
Übertragen, basierend auf der von der ersten Einrichtung empfangenen KI/ML-Modelltrainingsfähigkeit, von Informationen, die es der ersten Einrichtung ermöglichen, für jede von mindestens einer Iteration des KI/ML-Modelltrainingsprozesses zu bestimmen, ob die erste Einrichtung an der Iteration teilzunehmen hat; und **dadurch gekennzeichnet, dass** das Verfahren ferner Folgendes umfasst:
das Empfangen einer KI/ML-Modelltrainingsfähigkeit von der ersten Einrichtung umfasst Empfangen einer jeweiligen KI/ML-Modelltrainingsfähigkeit von jeder Einrichtung einer Vielzahl von Einrichtungen, einschließlich der ersten Einrichtung und das Übertragen, basierend auf der von der ersten Einrichtung empfangenen KI/ML-Modelltrainingsfähigkeit, von Informationen, die es der ersten Einrichtung ermöglichen, für jede von mindestens einer Iteration des KI/ML-Modelltrainingsprozesses zu bestimmen, ob die erste Einrichtung an der Iteration teilzunehmen hat, umfasst Übertragen, basierend auf der jeweiligen von jeder Einrichtung der Vielzahl von Einrichtungen empfangenen KI/ML-Modelltrainingsfähigkeit, von Informationen, die jeder Einrichtung der Vielzahl von Einrichtungen ermöglichen, für jede von mindestens einer Iteration des KI/ML-Modelltrainingsprozesses zu bestimmen, ob die Einrichtung an der Iteration teilzunehmen hat,
wobei das Übertragen von Informationen, die jeder Einrichtung ermöglichen, für jede von mindestens einer Iteration des KI/ML-Modelltrainingsprozesses zu bestimmen, ob die Vorrichtung an der Iteration teilzunehmen hat, Folgendes umfasst: Übertragen von Steuersignalisierung für jede Einrichtung der Vielzahl von Einrichtungen, um jede Einrichtung der Vielzahl von Einrichtungen mit einer einrichtungsspezifischen Regel zum Bestimmen, für jede Iteration des KI/ML-Modelltrainingsprozesses, ob die erste Einrichtung an der Iteration teilzunehmen hat, zu konfigurieren, wobei eine Iteration des KI/ML-Modelltrainingsprozesses einem jeweiligen Wert einer Iterationskennung (ID) derart zugeordnet ist, dass der jeweilige Wert der Iterations-ID für jede nachfolgende Iteration um eins erhöht wird, und die einrichtungsspezifischen Regeln, mit denen die Vielzahl von Einrichtungen konfiguriert ist, jede Einrichtung der Vielzahl von Einrichtungen dazu konfigurieren, selektiv an einer gegebenen Iteration teilzunehmen, basierend auf dem jeweiligen Wert der Iterations-ID, die der gegebenen Iteration zugeordnet ist; oder
wobei das Übertragen von Informationen, die der ersten Einrichtung ermöglichen, für jede von mindestens einer Iteration des KI/ML-Modelltrainingsprozesses zu bestimmen, ob die erste Einrichtung an der Iteration teilzunehmen hat, Folgendes umfasst: Übertragen von ersten Downlink-Steuerinformationen (DCI), die erste Planungsinformationen zum Planen einer Übertragung von Daten oder Steuerinformationen für eine gegebene Iteration des KI/ML-Modelltrainingsprozesses enthalten, wobei ein zyklischer Redundanzprüfwert (CRC-Wert) der ersten DCI mit einer ersten temporären Funknetzkennung (RNTI) verschlüsselt wird; und Übertragen von Steuersignalisierung, um die erste Einrichtung dazu zu konfigurieren, gemäß einer ersten Überwachungsperiodizität auf die ersten DCI zu überwachen.

8. Verfahren nach Anspruch 7, wobei die KI/ML-Modelltrainingsfähigkeit mindestens eines von Folgendem umfasst:
i) einer aktuellen Verarbeitungsfähigkeit der ersten Einrichtung;
ii) einem aktuellen Volumen an Trainingsdaten, die für den iterativen KI/ML-Modelltrainingsprozess an der ersten Einrichtung verfügbar sind;
iii) einer Erfassungskapazität der ersten Einrichtung zum Sammeln von Trainingsdaten für den iterativen KI/ML-Modelltrainingsprozess.

9. Verfahren nach Anspruch 7 oder 8, wobei die KI/ML-Modelltrainingsfähigkeit der ersten Einrichtung einen KI/ML-Modelltrainingsfähigkeitstyp umfasst, der aus einer vordefinierten oder konfigurierten Hierarchie von KI/ML-Modelltrainingsfähigkeitstypen ausgewählt ist.

10. Verfahren nach Anspruch 9, wobei das Empfangen der KI/ML-Modelltrainingsfähigkeit von der ersten Einrichtung Empfangen eines Index, der dem aus der vordefinierten oder konfigurierten Hierarchie von KI/ML-Modelltrainingsfähigkeitstypen ausgewählten KI/ML-Modelltrainingsfähigkeitstyp entspricht, umfasst.

11. Verfahren nach einem der Ansprüche 7 bis 10, ferner umfassend:
Übertragen von Steuersignalisierung, die eine Übertragung von Daten oder Steuerinformationen für eine gegebene Iteration des KI/ML-Modelltrainingsprozesses plant, wobei das Empfangen der KI/ML-Modelltrainingsfähigkeit von der ersten Einrichtung Empfangen der KI/ML-Modelltrainingsfähigkeit von der ersten Einrichtung, nachdem die Steuersignalisierung, die die Übertragung von Daten oder Steuerinformationen für die gegebene Iteration plant, übertragen wurde, umfasst.

12. Verfahren nach Anspruch 11, wobei:
die Steuersignalisierung, die die Übertragung von Daten oder Steuerinformationen für die gegebene Iteration plant, Steuerinformationen umfasst, die eine Ressource für einen physischen Uplink-Steuerkanal (PUCCH-Ressource), die durch die erste Einrichtung für die gegebene Iteration zu verwenden ist, identifizieren; und
das Empfangen der KI/ML-Modelltrainingsfähigkeit von der ersten Einrichtung Empfangen der KI/ML-Modelltrainingsfähigkeit für die gegebene Iteration auf der PUCCH-Ressource umfasst.

13. Vorrichtung, umfassend eine oder mehrere Einheiten zum Durchführen des Verfahrens nach einem der Ansprüche 1 bis 6.

14. Vorrichtung, umfassend eine oder mehrere Einheiten zum Durchführen des Verfahrens nach einem der Ansprüche 7 bis 12.

15. Prozessorlesbares Speichermedium, das Anweisungen speichert, die, wenn die Anweisungen durch den Prozessor ausgeführt werden, eine Vorrichtung dazu veranlassen, das Verfahren nach einem der Ansprüche 1 bis 12 durchzuführen.

## Revendications

1. Procédé de transmission de données d'intelligence artificielle ou d'apprentissage automatique (IA/ML) dans un réseau de communication sans fil, le procédé comprenant :
la détermination d'une capacité d'entraînement de modèle d'IA/ML d'un premier dispositif (110a-d, 402, 404, 406, 408), la capacité d'entraînement de modèle d'IA/ML indiquant une capacité du premier dispositif à participer activement à un processus d'entraînement d'un modèle d'IA/ML avec au moins un second dispositif (120a-c, 452) du réseau de communication sans fil, la capacité d'entraînement de modèle d'IA/ML étant déterminée sur la base d'au moins l'une :
i) d'une capacité de traitement actuelle du premier dispositif ;
ii) d'un volume actuel de données d'entraînement disponibles pour le processus d'entraînement de modèle d'IA/ML sur le premier dispositif ;
iii) d'une capacité de détection du premier dispositif pour collecter des données d'entraînement pour le processus d'entraînement de modèle d'IA/ML ;
la transmission de la capacité d'entraînement de modèle d'IA/ML au second dispositif ; et **caractérisée en ce que** le procédé comprend en outre :
la réception, à partir du second dispositif, d'une signalisation de commande configurant le premier dispositif avec une règle permettant de déterminer, pour une itération du processus d'entraînement de modèle d'IA/ML, si le premier dispositif doit participer à l'itération, dans lequel une itération du processus d'entraînement de modèle d'IA/ML est associée à une valeur respective d'un identifiant d'itération (ID) de sorte que la valeur respective de l'ID d'itération est incrémentée de un pour chaque itération suivante, et dans lequel la signalisation de commande configure le premier dispositif pour qu'il participe sélectivement à une itération donnée sur la base de la valeur respective de l'ID d'itération associé à l'itération donnée, ou la réception, à partir du second dispositif, d'une signalisation de commande pour configurer le premier dispositif pour surveiller de premières informations de commande de liaison descendante (DCI) selon une première périodicité de surveillance, dans lequel la transmission, à partir du second dispositif, de données ou d'informations de commande pour une itération donnée du processus d'entraînement de modèle d'IA/ML est planifiée par les premières DCI, et dans lequel une valeur de vérification de redondance cyclique (CRC) des premières DCI est brouillée avec un premier identifiant temporaire de réseau radio (RNTI).

2. Procédé selon la revendication 1, dans lequel la transmission de la capacité d'entraînement de modèle d'IA/ML au second dispositif comprend :
la détermination que la capacité d'entraînement de modèle d'IA/ML du premier dispositif a changé ; et
la transmission de la capacité d'entraînement modifiée de modèle d'IA/ML au second dispositif après avoir déterminé que la capacité d'entraînement de modèle d'IA/ML du premier dispositif a changé.

3. Procédé selon la revendication 2, dans lequel la détermination que la capacité d'entraînement de modèle d'IA/ML du premier dispositif a changé comprend l'identification d'une modification dans au moins l'un :
i) de la capacité de traitement actuelle du premier dispositif ;
ii) du volume actuel de données d'entraînement disponibles pour le processus d'entraînement de modèle d'IA/ML sur le premier dispositif ;
iii) d'une capacité de détection du premier dispositif pour collecter des données d'entraînement pour le processus d'entraînement de modèle d'IA/ML.

4. Procédé selon la revendication 1, dans lequel la détermination de la capacité d'entraînement de modèle d'IA/ML du premier dispositif comprend la sélection d'un type de capacité d'entraînement de modèle d'IA/ML parmi une hiérarchie prédéfinie ou configurée de types de capacités d'entraînement de modèles d'IA/ML.

5. Procédé selon la revendication 4, dans lequel la transmission de la capacité d'entraînement de modèle d'IA/ML au second dispositif comprend la transmission d'un indice correspondant au type de capacité d'entraînement de modèle d'IA/ML sélectionnée parmi la hiérarchie prédéfinie ou configurée de types de capacités d'entraînement de modèles d'IA/ML.

6. Procédé selon l'une quelconque des revendications 1, 4 et 5, dans lequel la transmission de la capacité d'entraînement de modèle d'IA/ML au second dispositif est effectuée après la réception de données ou d'informations de commande à partir du second dispositif pendant le processus d'entraînement de modèle d'IA/ML.

7. Procédé de transmission de données d'intelligence artificielle ou d'apprentissage automatique (IA/ML) dans un réseau de communication sans fil, le procédé comprenant :
la réception d'une capacité d'entraînement de modèle d'intelligence artificielle ou d'apprentissage automatique (IA/ML) à partir d'un premier dispositif (110a-d, 402, 404, 406, 408), la capacité d'entraînement de modèle d'IA/ML à partir du premier dispositif indiquant une capacité du premier dispositif à participer activement à un processus d'entraînement de modèle d'IA/ML avec au moins un second dispositif (120a-c, 452) du réseau de communication sans fil ;
la transmission, sur la base de la capacité d'entraînement de modèle d'IA/ML reçue à partir du premier dispositif, d'informations permettant au premier dispositif de déterminer, pour chacun d'au moins une itération du processus d'entraînement de modèle d'IA/ML, si le premier dispositif doit participer à l'itération ; et **caractérisé en ce que** le procédé comprend en outre :
la réception d'une capacité d'entraînement de modèle d'IA/ML à partir du premier dispositif, comprend la réception d'une capacité d'entraînement de modèle d'IA/ML respective à partir de chaque dispositif d'une pluralité de dispositifs, y compris le premier dispositif, la transmission, sur la base de la capacité d'entraînement de modèle d'IA/ML reçue à partir du premier dispositif, d'informations permettant au premier dispositif de déterminer, pour chacune d'au moins une itération du processus d'entraînement de modèle d'IA/ML, si le premier dispositif doit participer à l'itération comprend la transmission, sur la base de la capacité d'entraînement de modèle d'IA/ML respective reçue à partir de chaque dispositif de la pluralité de dispositifs, d'informations permettant à chaque dispositif de la pluralité de dispositifs de déterminer, pour chacune d'au moins une itération du processus d'entraînement de modèle d'IA/ML, si le dispositif doit participer à l'itération,
dans lequel la transmission d'informations permettant à chaque dispositif de déterminer, pour chacune d'au moins une itération du processus d'entraînement de modèle IA/ML, si le dispositif doit participer à l'itération comprend : la transmission de la signalisation de commande pour chaque dispositif de la pluralité de dispositifs pour configurer chaque dispositif de la pluralité de dispositifs avec une règle de dispositif spécifique permettant de déterminer, pour chaque itération du processus d'entraînement de modèle d'IA/ML, si le dispositif doit participer à l'itération, dans lequel une itération du processus d'entraînement de modèle d'IA/ML est associée à une valeur respective d'un identifiant d'itération (ID) de sorte que la valeur respective de l'ID d'itération est incrémentée de un pour chaque itération suivante, et les règles de dispositif spécifiques avec lesquelles sont configurés la pluralité de dispositifs configurent chaque dispositif de la pluralité de dispositifs pour participer sélectivement à une itération donnée sur la base de la valeur respective de l'ID d'itération associé à l'itération donnée ; ou
dans lequel la transmission d'informations permettant au premier dispositif de déterminer, pour chacune d'au moins une itération du processus d'entraînement de modèle IA/ML, si le premier dispositif doit participer à l'itération comprend : la transmission de premières informations de commande de liaison descendante (DCI) contenant de premières informations de planification pour la transmission de planification de données ou des informations de commande pour une itération donnée du processus d'entraînement de modèle d'IA/ML, dans lequel une valeur de vérification de redondance cyclique (CRC) des premières DCI est brouillée avec un premier identifiant temporaire de réseau radio (RNTI) ; et la transmission de la signalisation de commande pour configurer le premier dispositif pour surveiller les premières DCI selon une première périodicité de suivi.

8. Procédé selon la revendication 7, dans lequel la capacité d'entraînement de modèle d'IA/ML comprend au moins l'un :
i) d'une capacité de traitement actuelle du premier dispositif ;
ii) d'un volume actuel de données d'entraînement disponibles pour le processus d'entraînement de modèle d'IA/ML sur le premier dispositif ;
iii) d'une capacité de détection du premier dispositif pour collecter des données d'entraînement pour le processus d'entraînement de modèle d'IA/ML itératif.

9. Procédé selon la revendication 7 ou 8, dans lequel la capacité d'entraînement de modèle d'IA/ML du premier dispositif comprend un type de capacité d'entraînement de modèle d'IA/ML sélectionné parmi une hiérarchie prédéfinie ou configurée de types de capacités d'entraînement de modèles d'IA/ML.

10. Procédé selon la revendication 9, dans lequel la réception de la capacité d'entraînement de modèle d'IA/ML à partir du premier dispositif comprend la réception d'un indice correspondant au type de capacité d'entraînement de modèle d'IA/ML sélectionnée parmi la hiérarchie prédéfinie ou configurée de types de capacités d'entraînement de modèles d'IA/ML.

11. Procédé selon l'une quelconque des revendications 7 à 10, comprenant également :
la transmission de signalisation de commande planifiant la transmission de données ou d'informations de commande pour une itération donnée du processus d'entraînement de modèle d'IA/ML, dans lequel la réception de la capacité d'entraînement de modèle d'IA/ML à partir du premier dispositif comprend la réception de la capacité d'entraînement de modèle d'IA/ML à partir du premier dispositif après que la signalisation de commande planifiant la transmission de données ou d'informations de commande pour l'itération donnée soit transmise.

12. Procédé selon la revendication 11, dans lequel :
la signalisation de commande planifiant la transmission de données ou d'informations de commande pour l'itération donnée comprend des informations de commande identifiant une ressource de canal de commande de liaison montante physique (PUCCH) à utiliser par le premier dispositif pour l'itération donnée ; et
la réception de la capacité d'entraînement de modèle d'IA/ML à partir du premier dispositif comprend la réception de la capacité d'entraînement de modèle d'IA/ML pour l'itération donnée sur la ressource PUCCH.

13. Appareil, comprenant une ou plusieurs unités pour réaliser le procédé selon l'une quelconque des revendications 1 à 6.

14. Appareil, comprenant une ou plusieurs unités pour réaliser le procédé selon l'une quelconque des revendications 7 à 12.

15. Support de stockage lisible par ordinateur stockant des instructions qui, lorsque les instructions sont exécutées par le processeur, amènent un appareil à réaliser le procédé selon l'une quelconque des revendications 1 à 12.
